(19) Europäisches Patentamt
European Patent Office
Office européen des brevets

(11) **EP 3 363 872 A1**

(12) **EUROPEAN PATENT APPLICATION**
published in accordance with Art. 153(4) EPC

(43) Date of publication:
**22.08.2018 Bulletin 2018/34**

(21) Application number: **16855528.2**

(22) Date of filing: **14.10.2016**

(51) Int Cl.:
*C09J 7/00* (2018.01)          *B32B 27/00* (2006.01)
*C09J 201/00* (2006.01)

(86) International application number:
**PCT/JP2016/080539**

(87) International publication number:
**WO 2017/065275 (20.04.2017 Gazette 2017/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.10.2015   JP 2015203009**
         **06.10.2016   JP 2016198520**

(71) Applicant: **Nitto Denko Corporation**
**Ibaraki-shi, Osaka 567-8680 (JP)**

(72) Inventors:
• **SHIMOKITA, Keisuke**
**Ibaraki-shi**
**Osaka 567-8680 (JP)**
• **KOSAKA, Naofumi**
**Ibaraki-shi**
**Osaka 567-8680 (JP)**

• **TANI, Kensuke**
**Ibaraki-shi**
**Osaka 567-8680 (JP)**
• **CHIBA, Mizuho**
**Ibaraki-shi**
**Osaka 567-8680 (JP)**
• **OKADA, Kenichi**
**Ibaraki-shi**
**Osaka 567-8680 (JP)**
• **OOTAKE, Hironao**
**Ibaraki-shi**
**Osaka 567-8680 (JP)**
• **TAKAHASHI, Akiko**
**Ibaraki-shi**
**Osaka 567-8680 (JP)**
• **DOI, Asami**
**Ibaraki-shi**
**Osaka 567-8680 (JP)**

(74) Representative: **Grünecker Patent- und Rechtsanwälte PartG mbB Leopoldstraße 4 80802 München (DE)**

(54) **SEPARATOR-FITTED ADHESIVE TAPE AND SEPARATOR**

(57)     Provided is an adhesive tape with a release liner in which a decrease in the protrusion height of a low-adhesive convex part partially formed on the surface of an adhesive layer is sufficiently suppressed.

An adhesive tape with a release liner, containing an adhesive tape having a low-adhesive convex part partially formed on a surface of an adhesive layer, and a release liner for protecting the surface of the adhesive layer of the adhesive tape, wherein the release liner has a compressive elastic modulus of not more than 1 MPa.

EP 3 363 872 A1

Fig. 8

**Description**

[Technical Field]

The present invention relates to an adhesive tape with a release liner, and a release liner used therefor.

[Background Art]

Conventionally, pressure-sensitive adhesive tapes are known (e.g., patent documents 1 - 3 etc.). The adhesive tape of the pressure-sensitive type is an adhesive tape in which a non-adhesive or slightly adhesive convex part is partially provided on the surface of the adhesive layer (hereinafter "non-adhesiveness" and "slight adhesiveness" are collectively referred to as "low-adhesiveness"). When the adhesive tape is placed on the surface of an adherend without pressing, the low-adhesive convex part abuts against the surface of the adherend, and the adhesive layer hardly contacts the surface of the adherend. Thus, the adhesive tape can be moved on the surface of the adherend, whereby the positional adjustment of the adhesive tape can be performed. After positional adjustment, when the adhesive tape is pressed, the low-adhesive convex part is embedded in the adhesive layer, the adhesive layer contacts the adherend to express an adhesive force. As a result, the adhesive tape can be adhered to the intended position on the adherend.

Generally, adhesive tapes are wound in the final stage of production and stored as rolls. During the production of rolls, adhesive tapes are wound with pressure. Accordingly, the pressure due to the winding tightening is applied to the adhesive tapes. In addition, winding tightening of the roll also occurs due to stacking of rolls and changes in temperature and humidity during storage and transportation of the produced rolls.

[Document List]

[Patent documents]

  patent document 1: JP-A-H01-118584
  patent document 2: JP-A-2010-215900
  patent document 3: JP-A-2001-279200

[SUMMARY OF THE INVENTION]

[Problems to be Solved by the Invention]

According to the investigation by the present inventors, when a pressure due to the above-mentioned winding tightening is produced on the role of a pressure-sensitive adhesive tape, a part of the low-adhesive convex part is embedded in the adhesive layer, which in turn sometimes decreases the protrusion height of the convex part or causes complete embedding of the convex part in the adhesive layer. As a result, a positional adjustment function of the adhesive tape based on the low-adhesive convex part decreases or disappears. This imposes a problem that, when the adhesive tape is unwound from the roll and adhered to the surface of the adherend, the adhesive layer in contact with the adherend expresses adhesive force simply by placing the adhesive tape on the surface of the adherend, and positional adjustment of the adhesive tape may not be performed smoothly. It was also found that, when the adhesive tape unwound from the stored roll maintaining a certain level of protrusion height of the convex part is stored by stacking, the stacking pressure causes embedding of the convex part into the adhesive layer and a problem similar to the above sometimes occurs.

The present invention has been made in view of the above-mentioned situation and the problems to be solved thereby is provision of an adhesive tape with a release liner in which a decrease in the protrusion height of a low-adhesive convex part partially formed on the surface of an adhesive layer is sufficiently suppressed.

In addition, the problem is provision of a release liner used for an adhesive tape with a release liner, which release liner is capable of suppressing a decrease in a protrusion height of a low-adhesive convex part partially formed on the surface of an adhesive layer.

[Means of Solving the Problems]

The present inventors have conducted intensive studies in an attempt to solve the aforementioned problems and found that a release liner having a compressive elastic modulus of not more than a given value can sufficiently relax stress concentration on the low-adhesive convex part formed on the surface of an adhesive layer of an adhesive tape.

The present invention based on such finding is as described below.

[1] An adhesive tape with a release liner, comprising an adhesive tape having a low-adhesive convex part partially formed on a surface of an adhesive layer, and a release liner for protecting the surface of the adhesive layer of the adhesive tape, wherein the release liner has a compressive elastic modulus of not more than 1 MPa.

[2] The adhesive tape with a release liner of the above-mentioned [1], wherein the release liner has a compressive stress of not more than 0.1 MPa upon 200 $\mu$m compression, and a compressive stress of not more than 0.05 MPa at a deformation amount of 200 $\mu$m during compression recovery after the compression.

[3] The adhesive tape with a release liner of the above-mentioned [1] or [2], wherein the release liner comprises (a) a porous film, (b) a solid film or a skin layer laminated on at least one surface of (a), and (c) a release treatment applied to a surface of (b) the solid film or the skin layer.

[4] The adhesive tape with a release liner of the above-mentioned [3], wherein (a) the porous film is a polyolefin foam, a polyester foam, a polyurethane foam or a rubber foam.

[5] The adhesive tape with a release liner of the above-mentioned [4], wherein (b) the solid film is a resin solid film, and $E \times T^3$ value is less than 500 $\mu$N·m wherein tensile elastic modulus of the resin solid film or skin layer is $E(N/m^2)$ and thickness is $T(m)$.

[6] The adhesive tape with a release liner of any one of the above-mentioned [3] to [5], wherein the solid film comprises one or more kinds of resins selected from the group consisting of high density polyethylene, low density polyethylene, polypropylene, ethylene·propylene copolymer, ethylene·vinyl acetate copolymer and poly(ethylene terephthalate).

[7] The adhesive tape with a release liner of any one of the above-mentioned [1] to [6], wherein the low-adhesive convex part partially formed on the surface of the adhesive layer of the adhesive tape is a stripe-like, lattice mesh or dot-like low-adhesive pattern having a protrusion height of not more than 200 $\mu$m from the surface of the adhesive layer.

[8] The adhesive tape with a release liner of any one of the above-mentioned [1] to [7], wherein the adhesive layer has an elastic modulus of 0.01 - 10 MPa.

[9] The adhesive tape with a release liner of any one of the above-mentioned [1] to [8], wherein the low-adhesive convex part has an elastic modulus of not less than 0.1 MPa.

[10] The adhesive tape with a release liner of any one of the above-mentioned [1] to [9], wherein the low-adhesive convex part has an elastic modulus higher than the elastic modulus of the adhesive layer.

[11] A release liner for protecting a surface of an adhesive layer of an adhesive tape having a low-adhesive convex part partially formed on the surface of the adhesive layer, the release liner having a compressive elastic modulus of not more than 1 MPa.

[12] The release liner of the above-mentioned [11] having a compressive stress of not more than 0.1 MPa upon 200 $\mu$m compression, and a compressive stress of not more than 0.05 MPa at a deformation amount of 200 $\mu$m during compression recovery after the compression.

[13] The release liner of the above-mentioned [11] or [12] comprising (a) a porous film, (b) a solid film or a skin layer laminated on at least one surface of (a), and (c) a release treatment applied to a surface of (b) the solid film or the skin layer.

[14] The release liner of the above-mentioned [13], wherein (a) the porous film is a polyolefin foam, a polyester foam, a polyurethane foam or a rubber foam.

[15] The release liner of the above-mentioned [14], wherein (b) the solid film is a resin solid film, and $E \times T^3$ value is less than 500 $\mu$N·m wherein tensile elastic modulus of the resin solid film or skin layer is $E(N/m^2)$ and thickness is $T(m)$.

[16] The release liner of any one of the above-mentioned [13] to [15], wherein the solid film comprises one or more kinds of resins selected from the group consisting of high density polyethylene, low density polyethylene, polypropylene, ethylene ·propylene copolymer, ethylene·vinyl acetate copolymer and poly(ethylene terephthalate).

[Effect of the Invention]

According to the present invention, the release liner has a function to not only protect the surface of an adhesive layer but also relax stress concentration on the low-adhesive convex part formed on the surface of an adhesive layer. Thus, even when a pressure is applied onto the adhesive tape by winding tightening of a roll of the adhesive tape or stacking of unwound adhesive tape, crushing of the low-adhesive convex part and embedding of the low-adhesive convex part in the adhesive layer can be sufficiently suppressed. Accordingly, when the release liner is peeled off from the unwound adhesive tape and the adhesive tape is adhered to the adherend, the presence of the low-adhesive convex part prevents development of a high adhesive force between the adhesive tape and the adherend and permits smooth movement of the adhesive tape. As a result, the adhesive tape can be adhered to the intended position on the adherend with good workability.

[Brief Description of the Drawings]

Fig. 1 is a schematic perspective view of the first embodiment of the adhesive tape of the present invention.
Fig. 2 is a schematic cross-sectional view of changes in the adhesive tape during an operation to apply the tape to the adherend.
Fig. 3 is a flat plane view of the second embodiment of the adhesive tape of the present invention.
Fig. 4 is a flat plane view of the third embodiment of the adhesive tape of the present invention.
Fig. 5 is a flat plane view of a state where the dot-like convex parts of the adhesive tape of the present invention are arranged in a zigzag manner.
Fig. 6 is a schematic side view of a convex part composed of an aggregate of a plurality of cohesive particles.
Fig. 7 is a sectional perspective view showing the core-shell structure polymer particles constituting the convex part.
Fig. 8 is a schematic cross-sectional view of the essential part showing a state in which a release liner is superimposed on the surface of the adhesive layer having a convex part of the adhesive tape in the adhesive tape with a release liner of the present invention.
Fig. 9 is a schematic cross-sectional view of a preferable embodiment of the release liner in the adhesive tape with a release liner of the present invention.
Fig. 10 is a drawing explaining a measurement method of the elastic modulus of the adhesive layer and convex part.
Fig. 11 is a drawing explaining a measurement method of the frictional force of the convex part.

[Description of Embodiments]

The present invention is more specifically explained in the following by referring to preferable embodiments thereof.
The adhesive tape with a release liner of the present invention contains an adhesive tape having a low-adhesive convex part partially formed on the surface of an adhesive layer and a release liner that protects the surface of the adhesive layer of the adhesive tape.
Generally, a "sheet" often means a thin and wide material and a "tape" often means a thin and narrow material. The "adhesive tape" in the present invention is a concept including not only a thin and narrow adhesive member but also a thin and wide adhesive member often called "an adhesive sheet".
First, the adhesive tape is explained in detail.

1. Adhesive tape

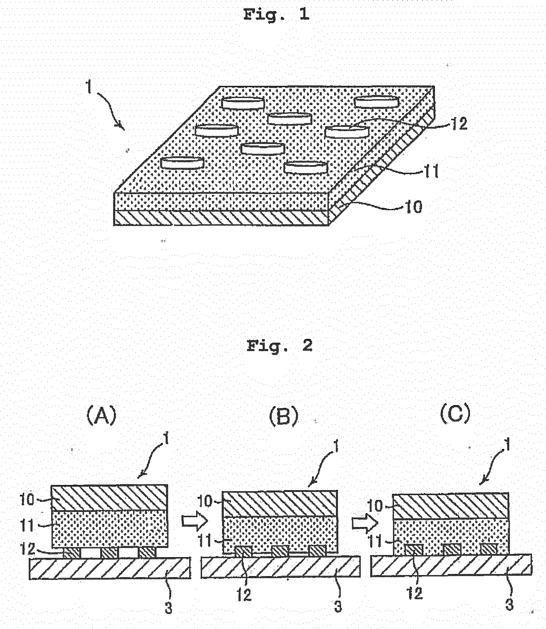

Fig. 1 is a schematic perspective view of the first embodiment constituting the adhesive tape with a release liner of the present invention. The adhesive tape of the present invention contains, as shown in the adhesive tape 1 of the first embodiment, an adhesive layer 11 and a low-adhesive convex part 12 partially formed on the surface of the adhesive layer 11. Here, "low-adhesive" of the "low-adhesive convex part" means nonadhesive (without tackiness) or lower tackiness of the convex part 12 than the adhesive layer 11.
The adhesive tape 1 of the first embodiment (Fig. 1) is a one surface adhesive tape and has a support 10 on a side opposite from the side of the adhesive layer 11 where the low-adhesive convex part 12 is formed.
Fig. 2 is a schematic cross-sectional view of the adhesive tape and the adherend, which explains changes in the adhesive tape 1 of Fig. 1 during an operation to apply the tape to the adherend 3. The adhesive tape of the present invention has a low-adhesive convex part 12 (hereinafter "low-adhesive convex part" is to be also abbreviated simply as "convex part") partially formed on the surface of the adhesive layer 11. Therefore, when the adhesive tape 1 is placed on the surface of the adherend 3 (state free of pressurization), as shown in Fig. 2(A), the low-adhesive convex part 12 abuts the adherend 3, and the adhesive tape 1 can easily move on the surface of the adherend 3 since the adhesive layer 11 does not substantially contact the adherend 3. When the adhesive tape 1 placed on the surface of the adherend 3 is pressed with a weak pressure, as shown in Fig. 2(B), low-adhesive convex part 12 is partly embedded in the adhesive layer 11. Thus, the adherend 3 contacts a part of the adhesive layer 11 while the low-adhesive convex part 12 is exposed from the surface of the adhesive layer 11 (in Fig. 2(B), the contact region between adhesive layer 11 and adherend 3 is not shown). As a result, the adhesive tape adheres to the adherend 3 with a low adhesive force. Therefore, after the adhesive tape 1 is temporarily fixed to the adherend 3 by pressing same with a weak pressure (after the adhesive tape is adhered with a low adhesive force), the adhesive tape 1 can be easily detached from the adherend 3. After detachment, low-adhesive convex part 12 is exposed and the adhesive tape 1 can be comparatively easily moved on the surface of the adherend 3. Fig. 2(C) shows the state when the adhesive tape 1 is adhered to the adherend 3 by applying a sufficient pressure on the adhesive tape 1 placed on the surface of the adherend 3. As shown in Fig. 2(C), due to the sufficient pressure applied to the adhesive tape 1, the whole low-adhesive convex part 12 is embedded in an adhesive layer 11 and the adhesive tape 1 is adhered to the adherend 3 with a sufficient adhesive force.

In this manner, the position of the adhesive tape in the adhesive tape with a release liner of the present invention can be easily adjusted on the adherend until the adhesion position on the adherend is finally determined and, after completion of the positional adjustment, the tape can be adhered to the adherend with a sufficient adhesive force.

[Adhesive layer]

The adhesive layer 11 of the adhesive tape 1 of the present invention is a pressure-sensitive adhesive layer containing a pressure-sensitive adhesive as a main component. The pressure-sensitive adhesive (hereinafter to be simply abbreviated as "adhesive") is not particularly limited and, for example, rubber adhesive, acrylic adhesive, polyamide adhesive, silicone adhesive, polyester adhesive, ethylene-vinyl acetate copolymer adhesive, urethane adhesive and the like can be mentioned based on the kind of the base polymer constituting the adhesive. It can be appropriately selected from these known adhesives. Of these, acrylic adhesives are superior in various properties such as heat resistance, weatherability and the like, and a desired property can be expressed by selecting the kind and the like of the monomer component constituting the acrylic polymer. Thus, they can be used preferably.

Acrylic adhesives are generally formed from a base polymer constituted of alkyl (meth)acrylate as a main monomer component. Examples of alkyl (meth)acrylate include (meth)acrylic acid $C_{1-20}$ alkyl ester (preferably (meth)acrylic acid $C_{2-12}$ alkyl ester, further preferably (meth)acrylic acid $C_{2-8}$ alkyl ester) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, octadecyl (meth)acrylate, nonadecyl (meth)acrylate, eicosyl (meth)acrylate and the like, and the like. One or more kinds of alkyl (meth)acrylates can be selected and used. In the present specification, "(meth)acryl" means "acryl" and "methacryl".

Where necessary, an acrylic polymer may contain a unit corresponding to other monomer component copolymerizable with alkyl (meth)acrylate with the aim to improve cohesion strength, heat resistance, crosslinking property and the like. Examples of such monomer component include carboxyl group-containing monomers such as acrylic acid, methacrylic acid, carboxyethyl acrylate, carboxypentyl acrylate, itaconic acid, maleic acid, fumaric acid, crotonic acid and the like; hydroxyl group-containing monomers such as hydroxybutyl (meth)acrylate, hydroxyhexyl (meth)acrylate, hydroxyoctyl (meth)acrylate, hydroxydecyl (meth)acrylate, hydroxylauryl (meth)acrylate, (4-hydroxymethylcyclohexyl)methyl methacrylate and the like; sulfonic acid group-containing monomers such as styrene sulfonic acid, ally sulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid and the like; phosphoric acid group-containing monomers such as 2-hydroxyethylacryloyl phosphate and the like; (N-substituted)amide monomers such as (meth)acrylamide, N,N-dimethyl (meth) acrylamide, N-butyl(meth)acrylamide, N-methylol (meth) acrylamide, N-methylolpropane(meth)acrylamide and the like; aminoalkyl (meth)acrylate monomers such as aminoethyl (meth)acrylate, N,N-dimethylaminoethyl (meth)acrylate, t-butylaminoethyl (meth)acrylate and the like; alkoxyalkyl (meth)acrylate monomer; maleimide monomers such as N-cyclohexylmaleimide, N-isopropylmaleimide, N-lauryl maleimide, N-phenylmaleimide and the like; itaconimide monomers such as N-methylitaconimide, N-ethylitaconimide, N-butylitaconimide, N-octylitaconimide, N-2-ethylhexylitaconimide, N-cyclohexylitaconimide, N-laurylitaconimide and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide and the like; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, N-vinylcaprolactam and the like; cyanoacrylate monomers such as acrylonitrile, methacrylonitrile and the like; epoxy group-containing acrylic monomers such as glycidyl (meth)acrylate and the like; glycol acrylate monomers such as polypropylene glycol (meth)acrylate, methoxyethylglycol (meth)acrylate, methoxypolypropyleneglycol (meth)acrylate and the like; acrylate monomers having heterocycle, halogen atom, silicon atom and the like such as tetrahydrofurfuryl (meth)acrylate, fluorine (meth)acrylate, silicone (meth)acrylate and the like; multifunctional monomers such as hexanediol di(meth)acrylate, (poly)ethylene glycol di(meth)acrylate, polypropylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate, hexyl di(meth)acrylate and the like; olefin monomers such as isoprene, dibutadiene, isobutylene and the like; vinyl ether monomers such as vinyl ether and the like, and the like. One or more kinds of these monomer components can be used.

Acrylic copolymer can be produced by subjecting the aforementioned alkyl (meth)acrylate and other monomer as necessary to polymerization by a known appropriate method. The molecular weight and the like of the acrylic copolymer are not particularly limited and, for example, one having a weight average molecular weight of 100000 - 2000000, preferably 150000 - 1000000, further preferably 300000 - 1000000 can be used.

The adhesive may be a hydrophilic adhesive using a polymer having an acidic group such as carboxyl group and the like as a base polymer and having hydrophilicity imparted by entirely or partially neutralizing the acidic group in the base polymer by adding a neutralizing agent. Hydrophilic adhesive generally causes less adhesive residue on the adherend and even when an adhesive residue is produced, it can be removed with ease by washing with pure water.

The polymer having an acidic group can be obtained by copolymerizing a monomer having an acidic group such as the aforementioned carboxyl group-containing monomer and the like during preparation of the base polymer.

Examples of the neutralizing agent include organic amino compounds with alkalinity such as primary amine (e.g., monoethylamine, monoethanolamine and the like), secondary amine (e.g., diethylamine, diethanolamine and the like), tertiary amine (e.g., triethylamine, triethanolamine, N,N,N'-trimethylethylenediamine, N-methyldiethanolamine, N,N-diethylhydroxylamine and the like), and the like.

The adhesive may contain a crosslinking agent as necessary.

As the crosslinking agent, crosslinking agents such as epoxy-based crosslinking agent, isocyanate-based crosslinking agent, melamine-based crosslinking agent, peroxide based crosslinking agent, metal alkoxide-based crosslinking agent, metal chelate based crosslinking agent, metal salt-based crosslinking agent, carbodiimide-based crosslinking agent, oxazoline based crosslinking agent, aziridine-based crosslinking agent, amine-based crosslinking agent and the like can be used, and epoxy-based crosslinking agent, isocyanate based crosslinking agent and the like can be preferably used. These may be used alone or two or more kinds thereof may be used in combination.

Examples of the epoxy-based crosslinking agent include N,N,N',N'-tetraglycidyl-m-xylenediamine, diglycidyl aniline, 1,3-bis(N,N-diglycidyl aminomethyl)cyclohexane, 1,6-hexanediol diglycidyl ether, neopentylglycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris(2-hydroxyethyl)isocyanurate, resorcin diglycidyl ether, bisphenol S diglycidyl ether, epoxy resin containing two or more epoxy groups in a molecule and the like.

Examples of the isocyanate based crosslinking agent include lower aliphatic polyisocyanates such as 1,2-ethylene diisocyanate, 1,4-butylene diisocyanate, 1,6-hexamethylene diisocyanate and the like; aliphatic polyisocyanates such as cyclopentylene diisocyanate, cyclohexylene diisocyanate, isophorone diisocyanate, hydrogenated tolylene diisocyanate, hydrogenated xylene diisocyanate and the like; aromatic polyisocyanates such as 2,4-tolylene diisocyanate, 2,6-tolylene diisocyanate, 4,4'-diphenylmethane diisocyanate, xylylene diisocyanate and the like, and the like.

The adhesive layer 11 may contain additives such as plasticizer, stabilizer, filler lubricant, colorant, ultraviolet absorber, antioxidant, colorant and the like.

In the present invention, the adhesive layer 11 preferably has an elastic modulus of 0.01 - 10 MPa, more preferably 0.1 - 10 MPa, to express sufficient tackiness.

As mentioned above, the adhesive tape 1 in the present invention has a constitution in which the low-adhesive convex part 12 is embedded in the adhesive layer 11 upon pressurization, and the adhesive layer 11 contacts the adherend 3 to express adhesive force. Therefore, the relationship between the elastic modulus of the adhesive layer 11 and the elastic modulus of the low-adhesive convex part 12 is important. As mentioned below, for the low-adhesive convex part 12 to exhibit the positional adjustment function, it should be free of deformation when it is in contact with the adherend, and therefore, it has an elastic modulus of not less than 0.1 MPa. When the adhesive layer 11 has an elastic modulus of 0.01 - 10 MPa, good results in the positional adjustment function and the adhesiveness can be obtained while maintaining the balance with the elastic modulus of the low-adhesive convex part 12 (not less than 0.1 MPa). The elastic modulus of the adhesive layer of the adhesive tape is measured by the following method.

While the thickness of the adhesive layer 11 is not particularly limited, it is preferably 10 - 1000 $\mu$m, more preferably 50 - 500 $\mu$m, particularly preferably 70 - 250 $\mu$m. When the thickness of the adhesive layer is within the above-mentioned preferable range, the adhesive tape after positional adjustment can be adhered to the adherend by pressurization adhesion with a sufficient adhesive force while maintaining the positional adjustment function of the low-adhesive convex part 12.

[low-adhesive convex part]

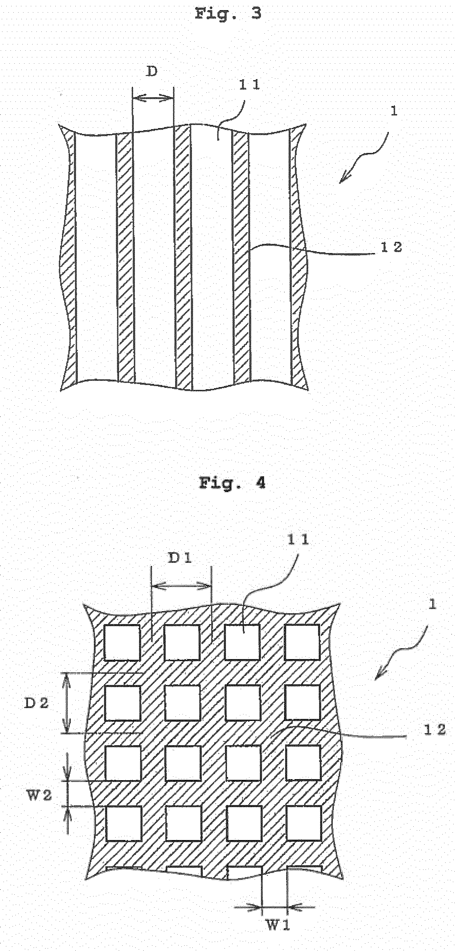

In the adhesive tape 1 of the above-mentioned first embodiment (Fig. 1), a low-adhesive convex part 12 is formed in a dot-like manner on the surface of the adhesive layer 11. Figs. 3, 4 are flat plane views of the essential parts of the second and the third embodiments of the adhesive tape of the present invention. In these embodiments, the low-adhesive convex part 12 is each formed as stripe-like or lattice mesh. In the adhesive tape 1 in the present invention, the low-adhesive convex part 12 may be formed in the same pattern on the whole surface of the adhesive layer 11. While the shape of the pattern is not particularly limited, dot-like, stripe-like, lattice mesh, net-like and the like are preferable from the aspects of easy pattern formation. As used herein, the "lattice mesh" and "net-like" are different in that the "lattice mesh" has a pattern of convex part in which the planar shape of the pore portion (the portion where the convex part is not present) is a square or a rectangle, and the "net-like" has a pattern of convex part in which the planar shape of the pore portion (the portion where the convex part is not present) is a shape other than square or rectangle. When the convex part is net-like, the shape of the pore portion (the portion where the convex part is not present) may be entirely the same or different for each pore portion, with preference given to the entirety being the same.

When the convex part has a dot-like pattern, the planar shape of each dot (convex part) may be various shapes such as triangle, rectangle (e.g., square, rectangle, diamond shape, trapozoid etc.), circular shape (e.g., true circle, circle close to true circle, ellipse etc.), oval, regular polygon (square etc.), star shape and the like, and the arrangement form of the dots is not particularly limited, and square matrix, zigzag pattern and the like are preferable. In the adhesive tape 1 of the first embodiment (Fig. 1), dots (convex part 12) having a circular planar shape are arranged in a zigzag pattern.

When the convex part 12 has a dot-like pattern, the flat plane area of the dot (convex part 12) is preferably 0.007 - 20 mm$^2$, more preferably 0.2 - 1.8 mm$^2$. The flat plane area of the dots (convex part 12) may be the same for all dots (convex part 12) or difficult for each dot (convex part 12). Preferably, all dots (convex part 12) have the same area. The pitch (distance between center points) between the adjacent dots (convex part 12) is preferably 0.1 - 5 mm, more preferably 0.2 - 2 mm.

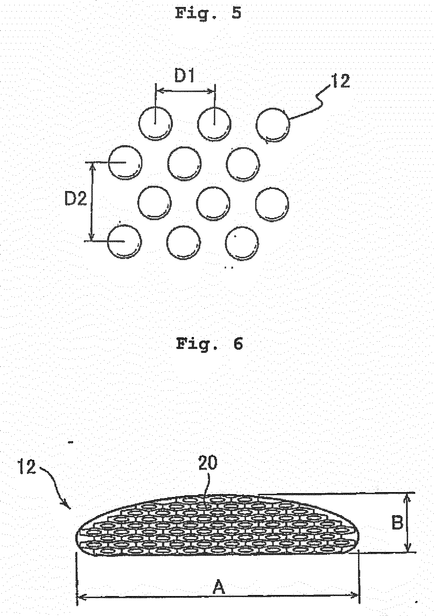

When the dots (convex part 12) are arranged in zigzag pattern (Fig. 5), the pitch between dots (convex part 12) is shown by D1 and D2 in Fig. 5.

When the convex part 12 has a stripe-like pattern, the width of each line part (convex part) is preferably 0.1 - 5 mm, more preferably 0.2 - 2 mm. The width of the space part between adjacent line parts (convex part) (D in Fig. 3) is preferably 0.1 - 5 mm, more preferably 0.2 - 2 mm.

When the convex part 12 has a lattice mesh pattern, the width of the vertical line and the horizontal line (convex part) (W1, W2 in Fig. 4) is preferably 0.1 - 5 mm, more preferably 0.2 - 2 mm, for each. The pitch between the adjacent vertical and horizontal line parts (convex part) (distance between axis lines (D1, D2 in Fig. 4)) is preferably 0.1 - 5 mm, more preferably 0.2 - 2 mm, for each.

The flat plane area, width and the like of the above-mentioned convex part 12 refer to the maximum area of the convex part 12 and the maximum width of the convex part 12 when the surface of the adhesive layer 11 is vertically viewed from above the surface of the adhesive layer 11. In addition, the tip of the above-mentioned convex part 12 to be in contact with the adherend 3 may be a flat surface or a non-flat surface.

The protrusion height of the low-adhesive convex part 12 from the surface of the adhesive layer 11 is preferably not more than 200 $\mu$m, more preferably not more than 150 $\mu$m, particularly preferably not more than 130 $\mu$m. Preferably, it is not less than 1 $\mu$m, more preferably not less than 10 $\mu$m. When the protrusion height exceeds 200 $\mu$m, the adhesiveness and adhesive force of the adhesive tape may be insufficient and when the protrusion height is less than 1 $\mu$m, the positional adjustment function of the low-adhesive convex part 12 may be insufficient.

The protrusion height of the convex part 12 is preferably 3 - 100%, more preferably 10 - 100%, of the thickness of the adhesive layer 11, with the thickness of the adhesive layer 11 as the standard. When the protrusion height of the convex part 12 is less than 3% of the protrusion height of the adhesive layer 11, the positional adjustment function of the adhesive tape may be insufficient and, conversely, when the thickness of the convex part exceeds 100% of the thickness of the adhesive layer, the adhesiveness and adhesive force of the adhesive tape may be insufficient.

The occupancy rate of the low-adhesive convex part 12 on the surface of the adhesive layer 11 ([total area of convex part 12/total area of surface of adhesive layer] ×100(%)) is preferably 30 - 90%, more preferably 40 - 80%, from the aspects of the adhesiveness and the low friction property of the adhesive tape 1 (that is, easy mobility on the adherend).

The constituent materials of the low-adhesive convex part 12 can be selected according to the kind of the adhesive constituting the adhesive layer 11. That is, any can be used as long as it is non-adhesive (free of tackiness) or has lower tackiness than the adhesive layer 11, insoluble in the adhesive layer 11, and has shape retention property. Examples thereof include inorganic materials such as glass powder, glass fiber, silica bead, aluminum oxide bead, metal fiber, metal net and the like, organic materials such as synthetic resin bead, synthetic resin balloon, natural fiber, synthetic resin fiber, natural resin and/or synthetic resin molding (thread, net, grid) and the like, or a pressure-sensitive adhesive (e.g., rubber, acrylic, ethylene-vinyl acetate copolymer etc.) having lower tackiness than the adhesive layer 11 and the like. One or more kinds of the constituent materials of the low-adhesive convex part 12 can be used.

That the constituent material of the low-adhesive convex part 12 has lower tackiness than the adhesive layer 11 means that the elastic modulus of the constituent material of the low-adhesive convex part 12 measured by a nano indenter is greater than the elastic modulus of the adhesive layer 11.

For the low-adhesive convex part 12 to exhibit a stable positional adjustment function, it is important that the part does not easily deform (=low tackiness) when it is in contact with an adherend. For this end, the convex part 12 preferably has an elastic modulus of not less than 0.1 MPa, furthermore preferably not less than 5 MPa. The elastic modulus of the convex part 12 is measured by the following method.

<Measurement method of elastic modulus of adhesive layer 11 and convex part 12>

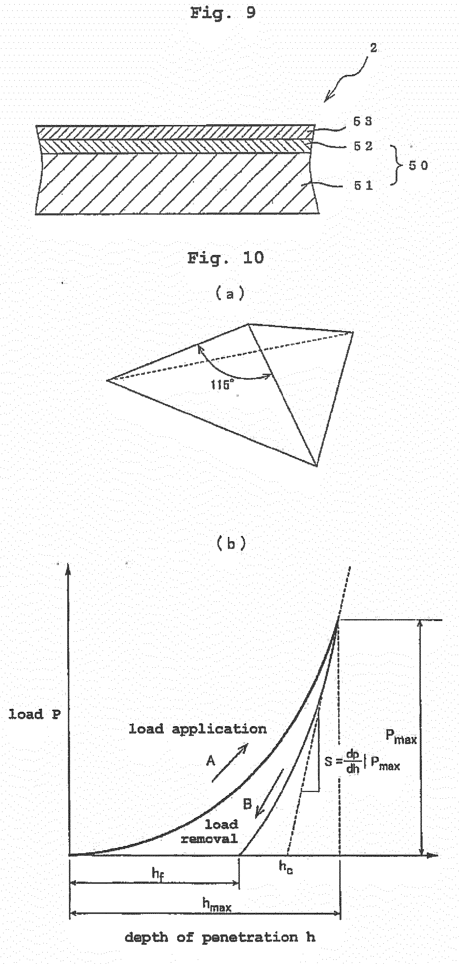

The measurement method of the elastic modulus of adhesive layer 11 and convex part 12 is explained by referring to Fig. 10.

The elastic modulus here is a composite elastic modulus obtained by a nano indentation test using a nano indenter "TriboScope" manufactured by HYSITRON. The nano indentation test is a test for measuring elastic properties of a test sample from the relationship between load P and depth of penetration h of the indenter, which is obtained in the process of gradually pushing a Berkovich indenter (triangular pyramidal diamond indenter) into the test sample until a predetermined maximum load Pmax is reached by applying a load P (hereinafter loading process), the process of maintaining at the maximum load Pmax for a given time (hereinafter maintenance process), and the process of, after maintenance, gradually unloading and withdrawing until the load P becomes 0 (hereinafter unloading process). The depth of penetration h means a distance between the tip of the indenter and the surface of a test material in an initial state (surface of test material before pushing in the indenter), and corresponds to the amount of displacement of the indenter from the position of initial contact of the indenter with the surface of the test material.

The elastic modulus of the convex part 12 and the adhesive layer 11 can be calculated from the following formula (1) based on the relationship between load P and depth of penetration h of the indenter which is obtained by the above-mentioned nano indentation test.

$$Er=1/\beta \cdot S/2 \cdot (\pi/A)1/2 \quad (1)$$

In the above-mentioned formula (1), Er is elastic modulus, $\beta$ is constant determined by indenter shape, and $\beta$=1.034 is used for Berkovich indenter. S is contact rigidity modulus, n is circular constant, and A is contact projection area of indenter and surface of the test material.

The elastic modulus of an adhesive layer can be measured by contacting the indenter with the surface of an adhesive layer of the test material (adhesive tape) . The elastic modulus of the convex part is measured by, for example, cutting out a convex part alone on the adhesive tape from the adhesive layer in an environment of -100°C or below by using an ultramicrotome equipped with a diamond blade to remove an influence of the adhesive layer, fixing same on a given sample table (made of SUS), and contacting the indenter on the surface of the convex part.

(Contact rigidity modulus)

The above-mentioned contact rigidity modulus S is calculated based on the relationship between load P and depth of penetration h of the indenter, which is obtained in the above-mentioned nano indentation test, particularly, the relationship obtained in the unloading process. In a more specific explanation, contact rigidity modulus S is defined by the inclination of an unloading curve immediately after transition to the unloading process, after the position of the indenter reached the maximum depth of penetration hmax (depth of penetration when maximum load Pmax is applied) and after the maintenance process. In other words, the contact rigidity modulus S means the gradient (dP/dh) of the tangent line L to the unloading curve at a point (hmax, Pmax).

(Contact projection area)

The above-mentioned contact projection area A means the area obtained by projecting the area of contact part between the indenter and the surface of a test material when the position of the indenter reached the maximum depth of penetration hmax, in the pushing-in direction of the indenter. When the depth of the contact part (contact depth) is hc, the contact projection area A can be approximated by the following formula (2) in the case of Berkovich indenter.

$$A \approx 24.56 \cdot hc^2 \quad (2)$$

The above-mentioned contact depth hc is shown by the following formula (3) and using maximum depth of penetration hmax, maximum load Pmax and contact rigidity modulus S.

$$hc=hmax-0.75 \cdot Pmax/S \quad (3)$$

In the nano indentation test in the present invention, measurement and analysis of elastic modulus are performed using measurement •analysis software TriboScanVer.8.0.0.4 manufactured by Hystron.

(Measurement condition)

penetration rate in loading•unloading processes 200 μN/sec
retention time 15 sec
maximum depth of penetration (depth of penetration on transition to unloading process) 0.9 - 5 μm

One preferable embodiment of the low-adhesive convex part 12 in the present invention is, for example, a convex part composed of an aggregate of a plurality of cohesive particles. Fig. 6 is a schematic side view of a convex part 12 composed of an aggregate of a plurality of cohesive particles 20. The aggregate of a plurality of cohesive particles 20 (convex part 12) has a curved surface as the top surface and is a flat body with a circular planar shape. The cohesive particles mean particles having a given cohesion force, and can also be grasped as an aggregate of particles. Examples of the plurality of cohesive particles 20 include polymer particle group derived from polymer emulsion, and the polymer particle group derived from polymer emulsion includes a polymer particle group composed of particles with a single polymer composition, and/or a polymer particle group composed of core-shell structure polymer particles with different polymer composition between core and shell. In the following description, particles with a single polymer composition is also referred to as "non-core-shell structure polymer particle". Since the polymer particle group derived from polymer emulsion has a cohesive force by itself, it does not always require an additive. However, the cohesion force of the polymer particle group may be enhanced by adding an additive such as epoxy-based crosslinking agent, silane coupling agent and the like to, for example, the polymer emulsion as long as the property of the convex part 12 is not influenced.

The polymer emulsion from which the polymer particle group is derived is obtained by emulsion polymerization, that is, by polymerization of monomer emulsion. The monomer component in the polymer emulsion (that is, monomer constituting monomer emulsion) preferably contains alkyl acrylate and/or alkyl methacrylate. As the alkyl acrylate, one or more kinds selected from ethyl acrylate, propyl acrylate, n-butyl acrylate, t-butyl acrylate, n-hexyl acrylate, cyclohexyl acrylate, 2-ethylhexyl acrylate, n-octyl acrylate, and lauryl acrylate is preferable. As the alkyl methacrylate, one or more kinds selected from methyl methacrylate, ethyl methacrylate, propyl methacrylate, n-butyl methacrylate, t-butyl methacrylate, n-hexyl methacrylate, cyclohexyl methacrylate, 2-ethylhexyl methacrylate, n-octyl methacrylate, lauryl methacrylate, and isobornyl methacrylate are preferable. In addition, carboxyl group-containing monomers such as acrylic acid, methacrylic acid, carboxyethyl acrylate, carboxypentyl acrylate, itaconic acid, maleic acid, fumaric acid, crotonic acid and the like, and hydroxyl group-containing monomers such as hydroxybutyl (meth)acrylate, hydroxyhexyl (meth)acrylate, hydroxyoctyl (meth)acrylate, hydroxydecyl (meth)acrylate, hydroxylauryl (meth)acrylate, (4-hydroxymethylcyclohexyl)methyl methacrylate and the like can be contained. One or more kinds of carboxyl group-containing monomer and hydroxyl group-containing monomer can be respectively used.

The core-shell structure polymer particle group is preferably composed of core-shell structure polymer particles having a higher elastic modulus of the shell than that of the core, and preferably composed of core-shell structure polymer particles having a core-shell structure in which the weight of the core to the weight of the shell is not more than 80% (preferably not more than 80% and not less than 10%). By setting the elastic modulus of the shell higher than the elastic modulus of the core, the frictional force of the core-shell structure polymer particles becomes small. Therefore, when the low-adhesive convex part 12 is constituted of a polymer particle group composed of core-shell structure polymer particles having an elastic modulus of the shell set higher than the elastic modulus of the core, the low-adhesive convex part 12 becomes low frictional, which in turn improves the positional adjustment function of the low-adhesive convex part 12 and affords an appropriate elastic modulus in relation to the adhesive layer 11.

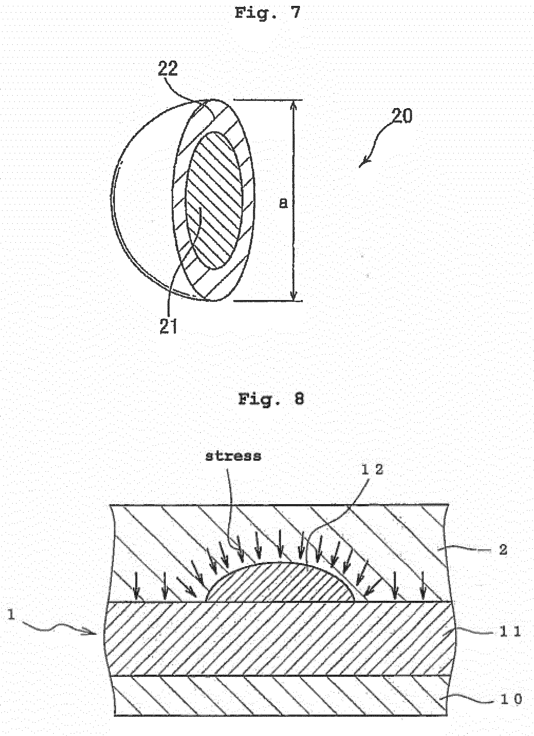

Fig. 7 is a sectional perspective view showing the core-shell structure polymer particles 20 constituting the core-shell structure polymer particle group. In individual core-shell structure polymer particle 20, core 21 is preferably constituted of acrylic polymer (A1) containing alkyl acrylate as the main monomer component, and shell 22 is preferably constituted of acrylic polymer (A2) containing alkyl acrylate and alkyl methacrylate as the main monomer components. The core-shell structure polymer particles 20 constituting the core-shell structure polymer particle group are approximately spherical, and the average particle size "a" thereof can be appropriately changed in consideration of the maximum diameter "A" and height "B" of the convex part 12 (see Fig. 6). For example, the particle size of the cohesive particles 20 in consideration of the maximum diameter "A" and height "B" of the convex part 12 is preferably not less than 100 nm, more preferably not less than 120 nm, from the aspects of the viscosity of the water dispersion liquid (polymer emulsion), and preferably not more than 300 nm, more preferably not more than 200 nm, from the aspects of cohesion of the particles after drying (that is, after removal of water from water dispersion liquid (polymer emulsion)). In this case, the maximum diameter "A" of the convex part 12 is preferably not less than 100 μm, more preferably not less than 250

μm, from the aspect of the stability of the shape of the convex part, and preferably not more than 3 mm, more preferably not more than 2 mm, from the aspect of the adhesive force of the adhesive tape. The height "B" is preferably not less than 1 μm, more preferably not less than 10 μm, from the aspect of the stability of the positional adjustment function, and preferably not more than 100 μm, more preferably not more than 80 μm, from the aspect of the adhesive force.

<core>

Acrylic polymer (A1) containing alkyl acrylate as the main monomer component and constituting core 21 is preferably a homopolymer of butyl acrylate (BA) (= n-butyl acrylate) or a copolymer in which alkyl acrylate other than butyl acrylate (BA) and alkyl methacrylate are copolymerized with butyl acrylate (BA).

Preferable examples of the alkyl acrylate other than butyl acrylate (BA) include ethyl acrylate, propyl acrylate, t-butyl acrylate, n-hexyl acrylate, cyclohexyl acrylate, 2-ethylhexyl acrylate, n-octyl acrylate, lauryl acrylate and the like, and one or more kinds of alkyl acrylate can be used in combination. Of these, alkyl acrylate containing an alkyl group having a carbon number of 3 - 9 such as propyl acrylate, 2-ethylhexyl acrylate, n-octyl acrylate and the like is preferable. Alkyl methacrylate is a component copolymerized mainly for the purpose of controlling elastic modulus of the polymer, and alkyl methacrylate containing an alkyl group having a carbon number of 1 - 18 (e.g., methyl methacrylate, ethyl methacrylate, propyl methacrylate, n-butyl methacrylate, t-butyl methacrylate, n-hexyl methacrylate, cyclohexyl methacrylate, 2-ethylhexyl methacrylate, n-octyl methacrylate, lauryl methacrylate, isobornyl methacrylate etc.) is preferably used. Of these, methyl methacrylate, ethyl methacrylate, cyclohexyl methacrylate and the like are preferable. One or more kinds of the alkyl methacrylate can be used in combination.

Acrylic polymer (A1) preferably contains 60 - 100 wt%, more preferably 70 - 99.9 wt%, further preferably 80 - 99 wt%, particularly preferably 80 - 98 wt%, of alkyl acrylate in all monomer components.

In addition, acrylic polymer (A1) may be copolymerized with a carboxyl group-containing monomer and a hydroxyl group-containing monomer to improve adhesiveness of an adhesive and impart stability to an emulsion. Examples of the carboxyl group-containing monomer include acrylic acid, methacrylic acid, carboxyethyl acrylate, carboxypentyl acrylate, itaconic acid, maleic acid, fumaric acid, crotonic acid and the like. Examples of the hydroxyl group-containing monomer include hydroxybutyl (meth)acrylate, hydroxyhexyl (meth)acrylate, hydroxyoctyl (meth)acrylate, hydroxydecyl (meth)acrylate, hydroxylauryl (meth)acrylate, (4-hydroxymethylcyclohexyl)methyl methacrylate and the like. The carboxyl group-containing monomer and/or hydroxyl group-containing monomer are/is preferably contained in an amount of 0.1 - 8 wt%, more preferably 1 - 7 wt%, further preferably 2 - 5 wt%, of all monomer components constituting acrylic polymer (A1).

<Shell>

Acrylic polymer (A2) containing alkyl acrylate and alkyl methacrylate as the main monomer components and constituting the shell preferably contains alkyl methacrylate in an amount of 30 - 95 wt%, more preferably 35 - 90 wt%, further preferably 40 - 80 wt%, of all monomer components. As alkyl methacrylate, alkyl methacrylate containing an alkyl group having a carbon number of 1 - 18 (e.g., methyl methacrylate (MMA), ethyl methacrylate, propyl methacrylate, n-butyl methacrylate, t-butyl methacrylate, n-hexyl methacrylate, cyclohexyl methacrylate, 2-ethylhexyl methacrylate, n-octyl methacrylate, lauryl methacrylate, isobornyl methacrylate etc.) is preferably used. Of these, methyl methacrylate (MMA), ethyl methacrylate, t-butyl methacrylate, isobornyl methacrylate and the like are preferable and methyl methacrylate (MMA) is particularly preferable.

In acrylic polymer (A2), alkyl acrylate is a component copolymerized mainly for the purpose of controlling elastic modulus of the polymer, and alkyl acrylate containing an alkyl group having a carbon number of 1 - 18 is preferable. Alkyl acrylate can be used singly or in combination of two or more kinds thereof. Specific examples of alkyl acrylate containing an alkyl group having a carbon number of 1 - 18 include methyl acrylate, ethyl acrylate, propyl acrylate, butyl acrylate (BA)(= n-butyl acrylate), t-butyl acrylate, n-hexyl acrylate, cyclohexyl acrylate, 2-ethylhexyl acrylate, n-octyl acrylate, lauryl acrylate, isobornyl acrylate and the like. Of these, alkyl acrylates containing an alkyl group having a carbon number of 3 - 9 such as propyl acrylate, butyl acrylate (BA), 2-ethylhexyl acrylate, n-octyl acrylate and the like are preferable, and butyl acrylate (BA) is particularly preferable.

In addition, acrylic polymer (A2) may be copolymerized with a carboxyl group-containing monomer and a hydroxyl group-containing monomer to improve adhesiveness of an adhesive and impart stability to an emulsion. Examples of the carboxyl group-containing monomer include acrylic acid, methacrylic acid, carboxyethyl acrylate, carboxypentyl acrylate, itaconic acid, maleic acid, fumaric acid, crotonic acid and the like. Examples of the hydroxyl group-containing monomer include hydroxybutyl (meth)acrylate, hydroxyhexyl (meth)acrylate, hydroxyoctyl (meth)acrylate, hydroxydecyl (meth)acrylate, hydroxylauryl (meth)acrylate, (4-hydroxymethylcyclohexyl)methyl methacrylate and the like. The carboxyl group-containing monomer and/or hydroxyl group-containing monomer are/is preferably contained in an amount of 0.1 - 8 wt%, more preferably 1 - 7 wt%, further preferably 2 - 5 wt%, of all monomer components constituting acrylic polymer (A2).

Acrylic polymer (A2) preferably contains butyl acrylate (BA) and methyl methacrylate (MMA) as monomer components. The "MMA ratio (%)", which is a ratio of the weight (N) of methyl methacrylate (MMA) to the weight (M) of butyl acrylate (BA) in acrylic polymer (A2) (N/M), can be changed according to the adherend to which the adhesive tape is applied, constituent material of the adhesive layer 11 and the like. It is preferably not more than 100%, more preferably 40 - 80%.

In addition, "core-shell ratio (%)", which is a ratio of the weight (L) of the core 21 to the weight (K) of the shell 22 (L/K) in the core-shell structure polymer particles, is preferably not more than 100%, more preferably 20 - 80%.

The detail of the weight ratio of shell 22 and core 21 and core-shell structure of the core-shell structure polymer particles can be analyzed by, for example, DSC measurement and TEM (3D-TEM) method.

The polymer emulsion from which the polymer particle group composed of core-shell structure polymer particles (polymer particle group composed of core-shell structure polymer particles, polymer particle group composed of non-core-shell structure polymer particles) are derived can be obtained by emulsion polymerization, that is, by polymerizing a monomer emulsion.

<Emulsion polymerization>

Emulsion polymerization to obtain a polymer emulsion from which the polymer particle group composed of core-shell structure polymer particles is derived can be performed by a conventional method. That is, an emulsifier (surfactant), a radical polymerization initiator and, where necessary, a chain transfer agent and the like are appropriately blended with the aforementioned monomer and emulsion polymerization is performed by a known emulsion polymerization method such as a batch charge method (batch polymerization method), a monomer dropping method, a monomer emulsion dropping method and the like. In the monomer dropping method, continuous dropping or split dropping is appropriately selected. Known emulsion polymerization methods can be appropriately combined. The reaction conditions and the like can be appropriately selected. The polymerization temperature is preferably, for example, about 40 - 95°C, and the polymerization time is preferably about 30 min - 24 hr.

Emulsion polymerization to obtain a polymer emulsion from which the polymer particle group composed of core-shell structure polymer particles is derived can be performed by multi-stage emulsion polymerization including emulsion polymerization to form a polymer to be the core of the core-shell structure polymer particles, and emulsion polymerization to form a polymer to be the shell in the presence of the resulting polymer to be the core. Each emulsion polymerization can be performed by a conventional method and the aforementioned method and conditions can be adopted.

As one embodiment, a production example of cohesive particles with core-shell ratio of 50% and MMA ratio of 50% (polymer particle group composed of core-shell structure polymer particles) is shown below.

Firstly, to produce a core of core-shell structure polymer particles, a mixture of LATEMUL E-118B as a surfactant (manufactured by Kao Corporation) (3 parts by weight) and ion exchange water (205 parts by weight) relative to butyl acrylate (BA) (100 parts by weight) was prepared in a container as a starting material and agitated in a homomixer (manufactured by Tokushu Kika Kogyo Co., Ltd.) at 6000 rpm under a nitrogen atmosphere for 5 min to give a monomer emulsion A.

Then, to produce a shell of core-shell structure polymer particles, a mixture of methyl methacrylate (MMA) (50 parts by weight), LATEMUL E-118B (1 part by weight) and ion exchange water (87.5 parts) relative to butyl acrylate (BA) (50 parts by weight) was prepared in another container as a starting material and agitated in a homomixer at 6000 rpm under a nitrogen atmosphere for 5 min to give a monomer emulsion B.

Thereafter, the total amount of the prepared monomer emulsion A) was charged in a reaction container equipped with a cooling tube, a nitrogen inlet tube, a thermometer, a dropwise addition facility, and stirring blades, the reaction container was sufficiently substituted with nitrogen with stirring, and the reaction mixture was heated to 60°C. V-50 (manufactured by Wako Pure Chemical Industries, Ltd.) (0.1 part by weight) as a water-soluble azo polymerization initiator was added relative to butyl acrylate (BA) (50 parts by weight) and the mixture was polymerized for 2 hr while keeping at 60°C to give a copolymer to be the core layer. Then, V-50 (0.5 parts by weight) alone was further added relative to butyl acrylate (BA) (50 parts by weight), the above-mentioned monomer emulsion B was added dropwise over 2.5 hr while keeping at 60°C to form a shell, whereby a water dispersion liquid containing core-shell structure polymer particles with solid content concentration of 40% was obtained. The obtained core-shell structure polymer particles had an average particle size of 160 nm.

When convex part 12 is formed from plural cohesive particles (polymer particle group derived from polymer emulsion) 20, for example, a method including adding dropwise a polymer emulsion (emulsion liquid) on the surface of the adhesive layer 11 with a dispenser, a method including transcribing a polymer emulsion (emulsion liquid) on the surface of the adhesive layer 11 with a gravure roll having an engraved pattern corresponding to the pattern of the convex part 12, a method including printing a polymer emulsion (emulsion liquid) by using a general printing technique such as screen printing, offset printing, flexo printing and the like and the like can be mentioned. Individual particles in a plurality of cohesive particles (polymer particle group derived from polymer emulsion) are substantially spherical before they form aggregates of particles. The average particle size of plural cohesive particles (polymer particle group derived from polymer emulsion) is preferably not less than 100 nm, more preferably not less than 120 nm, from the aspect of viscosity of polymer emulsion (water dispersion liquid). On the other hand, it is preferably not more than 300 nm, more preferably not more than 200 nm, from the aspect of cohesiveness of the polymer particles after drying the polymer emulsion (water dispersion liquid).

The maximum diameter (symbol A in Fig. 6) of the convex part 12 formed from plural cohesive particles (polymer particle group derived from polymer emulsion) 20 is preferably not less than 100 nm, more preferably not less than 250 nm, from the aspects of shape stability of the convex part. It is preferably not more than 3 mm, more preferably not more than 2 mm, for expression of a sufficient adhesive force after pressurization adhesion. The height (symbol B in Fig. 6) of the convex part 12 is preferably not less than 1 $\mu$m, more preferably not less than 10 $\mu$m, from the aspect of the stability of the positional adjustment function of the adhesive tape 1, and preferably not more than 200 $\mu$m, more preferably not more than 100 $\mu$m, particularly preferably not more than 80 $\mu$m, from the aspect of the adhesiveness and adhesive force of the adhesive tape.

<Measurement of average particle size>

The average particle size of plural cohesive particles (polymer particle group derived from polymer emulsion) is measured by the following method. One cycle of processing wherein several cohesive particles are extracted randomly from plural cohesive particles forming certain one convex part 12, the diameter of each cohesive particle is measured by a laser diffraction scattering method, and a value positioned at the center of the diameter of the measured several cohesive particles is adopted (namely, evaluated by median diameter) is repeated several times to give several median diameters. The mean thereof is taken as the average particle size.

As another preferable embodiment of the low-adhesive convex part 12 of the present invention, a convex part composed of a porous screen can be mentioned. In the present invention, a porous screen refers to a porous sheet (or having pores). The porous screen also includes a net.

While specific examples of the porous screen are not particularly limited, for example, plastic net, fiber net, metal thread net and the like can be mentioned. Also, for example, plastic sheet, thin leaf metal sheet, woven fabric, non-woven fabric, paper and the like that underwent a perforation treatment and the like can be mentioned.

The shape of the pore or net of a porous screen is not particularly limited as long as it exhibits the above-mentioned property and, for example, triangle, rectangle (e.g., square, rectangle, diamond, trapozoid etc.), circular shape (e.g., true circle, approximately true circle, ellipse etc.) and the like can be mentioned. It may be an indefinite shape similar to the aforementioned shape. The shape of the pore or net may be completely the same or different for each pore.

The thickness of the porous screen is not particularly limited as long as the above-mentioned property can be exhibited and is, for example, preferably 10 - 200 $\mu$m, preferably 50 - 150 $\mu$m. When the thickness is less than 10 $\mu$m, the slip property may be degraded. On the other hand, when it exceeds 200 $\mu$m, adhesiveness and slip property may not be achieved simultaneously.

When the porous screen is a net, the material thereof is not particularly limited. Examples thereof include synthetic resin (plastic) such as nylon, polyethylene, polypropylene, polyester and the like, natural fiber, metal fiber and the like.

While the basis weight is not particularly limited, it is preferably 1.0 - 70 g/m$^2$, preferably 2.0 - 20 g/m$^2$, since the adhesiveness and slip property are simultaneously achieved in the adhesive face to which a porous screen has been adhered.

The size of the mesh is not particularly limited. However, to simultaneously achieve adhesiveness and slip property of the adhesive face to which a porous screen has been adhered, 5/inch - 50/inch is preferable, and 20/inch - 40/inch is preferable.

Examples of the commercially available product of such net include trade name "net ND20" manufactured by DAISEN Co., Ltd. and the like.

When the porous screen is a sheet having pores, the material thereof is not particularly limited. However, plastic and non-woven fabric are preferable for simultaneously achieving adhesiveness and slip property of the adhesive face to which a porous screen has been adhered.

The size of pores in a porous screen is not particularly limited as long as the above-mentioned property can be exhibited. The size of pores may be common or different for each pore. The size of such pore is about 500 $\mu$m - 10 mm at the largest part of the pore.

The distribution of the pores in a porous screen is not particularly limited as long as the above-mentioned property can be exhibited. The pores may be concentrated in a certain area or may be dispersed as a whole.

The distance between pore parts of a porous screen is not particularly limited, and may be constant or may not be constant.

As other preferable embodiment of the low-adhesive convex part 12 of the present invention, a convex part made of solid particles can be mentioned.

Specific examples of the solid particles include inorganic solid particles such as calcium carbonate, barium carbonate, calcium sulfate, aluminum sulfate, molybdenum disulfide, titanium oxide, alumina, silica, magnesium oxide, calcium oxide, calcium hydroxide, ferrous oxide, ferric oxide, glass bead and the like; and organic solid particles such as hydrogenated rubber, ebonite, lignin/phenol resin, styrene resin, vinyl chloride resin, (meth)acrylic resin, polypropylene resin, polyethylene resin, melamine resin, urea resin, other resins and the like. One or more kinds of solid particles can be used.

As the solid particles, hollow solid particles can also be used as long as the hollow particle walls are not disrupted by the press pressure. Examples of such hollow solid particle include hollow solid particles free of disruption of hollow particle walls by the press pressure such as organic balloons such as urea resin balloon, melamine resin balloon, phenol resin balloon, polyvinyldene chloride balloon, epoxy resin balloon; inorganic balloons such as glass balloon, Shirasu balloon, carbon balloon, alumina balloon, silica sand balloon and the like. As used herein, "free of disruption" is used to mean that the gas in the hollow particles does not leak outside due to the breakage of even a part of the hollow particle wall.

The solid particles preferably have an average particle size of 1 - 100 $\mu$m. The average particle size of the solid particles can be measured by a laser diffraction •scattering method. To be specific, particle size distribution of inorganic filler is formed on a volume standard by a laser diffraction scattering particle size distribution analyzer, and the median diameter thereof is taken as the average particle size to be used for the measurement. As a measurement sample, solid particles dispersed in water by ultrasonication can be preferably used.

In the present invention, when the adhesive tape 1 is a single-sided adhesive tape, it has, as shown in Fig. 1, a support 10 on a surface opposite to the surface on which the low-adhesive convex part 12 of the adhesive layer 11 is provided. The support 10 is not particularly limited, and specific examples thereof include single films of polyester (e.g., polyethylene terephthalate (PET) etc.), nylon, saran (trade name), polyvinyl chloride, polyethylene, polypropylene, ethylene-vinyl acetate copolymer, polytetrafluoroethylene, ionomer resin and the like, metal foil, a laminate film of two or more kinds of films selected therefrom and the like. To improve adhesiveness (anchor property) between a support and an adhesive layer, a laminate film of a non-porous film made of the above-mentioned material and the following porous film may be used as a support and an adhesive layer may be formed on the porous film side of the support.

Examples of the porous film include paper, woven fabric, non-woven fabric (e.g., polyester (e.g., poly(ethylene terephthalate) (PET) etc.) non-woven fabric etc.), films obtained by a mechanical perforation treatment of single films of the above-mentioned film (e.g., polyester (e.g., poly(ethylene terephthalate) (PET) etc.), nylon, saran (trade name), polyvinyl chloride, polyethylene, polypropylene, ethylene-vinyl acetate copolymer, polytetrafluoroethylene, ionomer resin and the like, metal foil, a laminate film of two or more kinds of films selected therefrom etc.), and the like, and paper, woven fabric, non-woven fabric (e.g., polyester non-woven fabric, poly(ethylene terephthalate) non-woven fabric etc.) are particularly preferable from the aspect of the flexibility of the support. In the case of a porous film, for example, woven fabric or non-woven fabric, the fabric weight is preferably set to 5 - 30 g/m$^2$ to improve anchor property.

The laminate film as the support is produced by a known production method of a laminate film such as heat lamination method, dry lamination method, wet lamination method, extrusion lamination method, hot-melt lamination, coextrusion lamination method and the like.

While the thickness of the support is not particularly limited, it is preferably 3 - 200 $\mu$m, more preferably 3 - 100 $\mu$m, from the aspect of broad utility for general use as an adhesive tape.

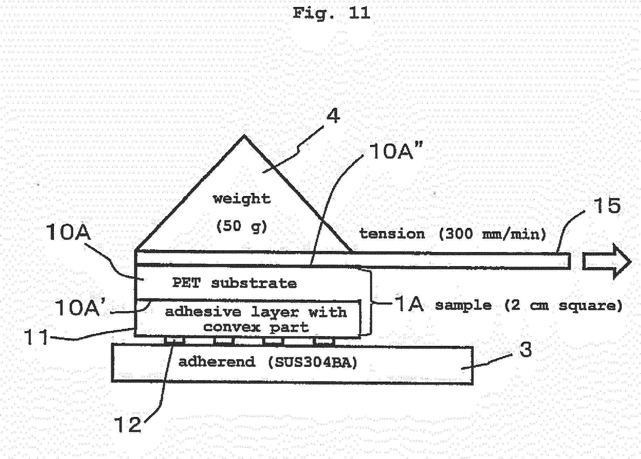

In the present invention, the adhesive tape 1 shows low friction due to the presence of the low-adhesive convex part 12 on the surface of the adhesive layer 11, and can move smoothly on the surface of adherend 3 before adhesion. To freely move the adhesive sheet 1 on the surface of the adherend 3, the frictional force of the adhesive tape is preferably not more than 0.4N/cm$^2$. When the frictional force exceeds 0.4N/cm$^2$, positional adjustment by sliding becomes difficult, and when it is not more than 0.4N/cm$^2$, positional adjustment can be performed free of stress. The frictional force is that of the low-adhesive convex part 12 in contact with the surface of the adherend. The measurement method of the frictional force is explained by reference to Fig. 11.

In sample 1A as a measurement target in Fig. 11, an adhesive face on the side free of the convex part 12 of the adhesive layer 11 with a convex part is adhered to one surface 10A' of the PET substrate 10A. The sample 1A cut into 2 cm square is stood still on a stainless plate (SUS304BA, thickness: 400 $\mu$m, length 100 mm, width 30 mm, mass 9.5 g) 3 as an adherend such that the convex part 12 contacts the plate. Then, 2 cm×10 cm PET substrate (guide) 15 is fixed on the sample 1A with a double-sided adhesive tape (not shown). A weight 4 (50 g) is placed above the other surface 10 A" of the PET substrate 10A such that a force is applied substantially equally to the entire sample 1A, weight 4 is fixed, sample 1A is pulled in the horizontal direction at a rate of 300 mm/min and the stress (N/cm$^2$) applied at that time is measured and used as a frictional force. The weight 50 g of the weight 4 was determined from experience. The frictional force is an index for evaluating the positional adjustment function of the adhesive tape 1. When the position of the adhesive tape 1 is adjusted, the user moves the adhesive tape 1 on the surface of the adherend 3 while pressing the adhesive tape 1 against the surface (adherend surface) of the adherend 3 with a predetermined force. Assuming that the pressure applied to the adherend 3 from the adhesive tape 1 when the user operates the side of the other surface 10A" of the adhesive tape 1 is about 12.5 g/cm$^2$, and the value 50 g was obtained by back calculation from this value. The weight 50 g presupposes that the weight of sample 1A does not substantially affect the stainless plate 3. For example, when a support other than the PET substrate is used and the weight thereof substantially affects the stainless plate 3, such weight is of course subtracted from 50 g.

2. release liner

The adhesive tape with a release liner of the present invention has the release liner to protect the surface of an adhesive layer of the adhesive tape. Fig. 8 is a schematic cross-sectional view of the essential part showing a state in which release liner 2 is superimposed on the surface of the adhesive layer 11 of the adhesive tape 1. release liner 2 covers the adhesive layer 11 and a low-adhesive convex part 12 formed on the surface of the adhesive layer 11.

In the present invention, the release liner 2 having a compressive elastic modulus of 1 MPa or below is used. That is, the release liner 2 is provided with not less than a certain level of cushioning property. The release liner 2 covering the surface of the adhesive layer 11 of the adhesive tape 1 has cushioning property corresponding to a compressive elastic modulus of not more than 1 MPa. Thus, even when the release liner 2 is wound together with the adhesive tape 1 and stored as rolls and the pressure due to the winding tightening is applied to the adhesive tape 1, as shown in Fig. 8, concentration of stress to the low-adhesive convex part 12 formed on the surface of the adhesive layer 11 is reduced by the release liner 2. Therefore, crushing of the convex part 12 and embedding thereof in the adhesive layer 11 to markedly decrease the protrusion height of the convex part 12 can be prevented. The compressive elastic modulus of the release liner 2 is more preferably not more than 0.7 MPa, particularly preferably not more than 0.5 MPa.

In the present invention, the release liner 2 preferably satisfies the above-mentioned compressive elastic modulus, and has a compressive stress of not more than 0.1 MPa upon 200 $\mu$m compression and a compressive stress of not more than 0.05 MPa at a deformation amount of 200 $\mu$m during compression recovery after the compression.

As mentioned above, to ensure good adhesiveness of the adhesive tape during temporary fixation of the adhesive tape to the adherend and adhesion (main bonding) of the adhesive tape to the adherend by pressurizing the adhesive tape, the protrusion height of the low-adhesive convex part 12 is preferably not more than 200 $\mu$m. The compressive stress upon 200 $\mu$m compression, and the compressive stress at a deformation amount of 200 $\mu$m during compression recovery after the compression of the release liner 2 are defined because, when the compressive stress on application of the compression amount and deformation amount on compression recovery of the release liner 2 to the maximum protrusion height (200 $\mu$m) within the preferable range of the protrusion height of the low-adhesive convex part 12 is sufficiently small and the protrusion height of the low-adhesive convex part 12 is not more than 200 $\mu$m, the stress that acts on the low-adhesive convex part 12 due to the pressure from the winding tightening of the adhesive tape is sufficiently reduced and crushing of the convex part 12 and embedding of the convex part 12 in the adhesive layer 11 can be prevented at a higher level.

The compressive stress upon 200 $\mu$m compression of the release liner 2 is more preferably not more than 0.05 MPa, particularly preferably not more than 0.04 MPa. In addition, the compressive stress at a deformation amount of 200 $\mu$m during compression recovery after the compression is more preferably not more than 0.04 MPa, particularly preferably not more than 0.03 MPa.

The release liner 2 is not particularly limited as regards material, form and the like as long as it has the above-mentioned compressive elastic modulus and compressive stress. It is preferably one wherein at least one surface of a film mainly composed of a porous film is subjected to a release treatment since the cushioning property can be obtained easily. As used herein, the "film mainly composed of a porous film" means a single substance of a porous film or a laminate film 50 of a porous film 51 and other film (layer) 52 shown in Fig. 9. The symbol 53 in Fig. 9 is a release layer.

Examples of the porous film 51 include (1) paper, woven fabric, non-woven fabric (e.g., polyester (e.g., poly(ethylene terephthalate) (PET) etc.) non-woven fabric etc.), (2) a film obtained by a mechanical perforation treatment of a solid film comprising, as a component, one or more kinds of resins selected from the group consisting of polyester (e.g., poly(ethylene terephthalate) (PET) etc.), nylon, saran (trade name), polyvinyl chloride, polyethylene, polypropylene, ethylene-vinyl acetate copolymer, polytetrafluoroethylene, and ionomer, (3) foam film of polyolefin foam (e.g., foam comprising, as a component, noncrosslinked polyethylene foam, noncrosslinked polyethylene foam, polypropylene foam, polyethylene (PE) and polypropylene (PP) etc.), polyester foam (e.g., poly(ethylene terephthalate) foam, etc.), urethane foam (e.g., soft urethane foam, hard urethane foam, urethane modified polyisocyanurate foam, polyisocyanurate foam etc.), or rubber foam and the like, and the like. Of these, foam film is preferable, polyolefin foam film is more preferable, since sufficient cushioning property is obtained easily.

The porous film 51 preferably has an apparent density measured according to JIS K 7222 (2005) of not more than 500 kg/m$^3$, more preferably not more than 200 kg/m$^3$. When the porous film has such apparent density, (a) a release liner having a compressive elastic modulus of not more than 1 MPa, (b) a release liner having a compressive elastic modulus of not more than 1 MPa, a compressive stress of not more than 0.1 MPa upon 200 $\mu$m compression, and a compressive stress of not more than 0.05 MPa at a deformation amount of 200 $\mu$m during compression recovery after the compression are easily obtained. The apparent density of the porous film is preferably not less than 20 kg/m$^3$, more preferably not less than 30 kg/m$^3$, to prevent breakage and tearing due to the tension applied during production.

The thickness of the porous film 51 is preferably not less than 100 $\mu$m, more preferably not less than 500 $\mu$m, to disperse the stress applied on the convex part. In view of the thickness when it is wound in a roll (that is, to increase the amount of the adhesive sheet to be wound), the thickness is preferably not more than 2000 $\mu$m, more preferably not more than 1500 $\mu$m, further preferably not more than 1100 $\mu$m.

When the porous film is a foam film, one having an average major axis of fine pores within the range of 10 - 1000 $\mu$m and an average minor axis within the range of 10 - 1000 $\mu$m is preferably used. The pore ratio of the foam film is preferably 50 - 99%, more preferably 60 - 98%, from the aspect of flexibility. As used herein, the "pore ratio" means an area ratio of the fine pores in the area of the film in the flat plane perpendicular to the thickness direction of the foamed film.

Examples of the other film (layer) 52 include metal or resin solid film, skin layer and the like.

The "metal or resin solid film" means a metal or resin non-porous film free of a mechanical perforation treatment. A metal or resin film having fine pores inevitably developed in the production stage for forming a film of a metal or resin is encompassed in the "solid film". Examples of the resin solid film include a film formed from one or more kinds of resins selected from the group consisting of polyester (e.g., poly(ethylene terephthalate) (PET), poly(ethylene naphthalate) (PEN) etc.); polyamide (e.g., nylon etc.); polyvinyl chloride (PVC); polyvinyl acetate (PVAc); polyvinyldene chloride; polyolefin (e.g., polyethylene (high density polyethylene, low density polyethylene), polypropylene, reactor TPO, ethylene. propylene copolymer, ethylene-vinyl acetate copolymer (EVA) etc.); polyimide (PI); fluoro resin (e.g., polytetrafluoroethylene etc.); cellophane and ionomer resin (e.g., resin obtained by crosslinking a polymer having polyethylene unit (E) and acrylic acid unit (A) with a metal (M) etc.) and the like. As the metal solid film, aluminum foil, copper foil, stainless foil and the like can be mentioned.

As the solid film, a resin solid film is preferable, more preferably a film formed from one or more kinds of resins selected from the group consisting of polyolefin, polyester and polyimide, further preferably a film formed from one or more kinds of resins selected from the group consisting of polyethylene (high density polyethylene, low density polyethylene), polypropylene, ethylene•propylene copolymer, ethylene-vinyl acetate copolymer and poly(ethylene terephthalate).

The thickness of the metal or resin solid film is preferably 3 - 80 $\mu$m, more preferably 3 - 50 $\mu$m, further preferably 10 - 50 $\mu$m, from the aspects of maintenance of the cushioning property of the porous film and stable formation of the release layer.

Lamination of the solid film on a porous film is performed by a conventional production method of a laminate film such as heat pressing by a heat press machine, roll-to-roll continuous heat lamination processing and the like.

The "skin layer" is a porous thin layer having a pore ratio smaller than that of a porous film (foam film) and formed on a surface of the porous film (foam film). The "pore ratio" is an area ratio of fine pores in the area of the thin film in the flat plane perpendicular to the thickness direction of the porous film. The pore ratio of the skin layer is preferably not more than 10%, more preferably not more than 5%, from the aspects of maintenance of the cushioning property of the porous film (foam film) and stable formation of the release layer. The thickness of the skin layer is preferably 3 - 50 $\mu$m, more preferably 3 - 20 $\mu$m, from the aspects of maintenance of the cushioning property of the porous film (foam film) and stable formation of the release layer.

The skin layer is generally formed by melting a surface layer portion of the porous film (foam film) 51. For example, a skin layer can be formed on the side of a surface to be in contact with a heating roll of the film by using a heating roll set to a temperature about 5 - 20°C lower than the melting point of the film and reducing the rotating speed of the heating roll to a level lower than the running speed of the film.

Generally, a relational formula:

$$R=PL^3/(4bT^3x)$$

wherein P: breaking load (N), L: bending span (m), b: test piece width (m), T: thickness (m), x: deflection stands between flexural elastic modulus (R) and load, thickness of a film or layer.

In general resins, the flexural elastic modulus (R) and the tensile elastic modulus (E) are almost equal.

A load applied to a convex part on the surface of an adhesive tape is important for whether or not the convex part is sufficiently protected.

Thus, assuming the value of the breaking load as a load on the convex part, protection property of the solid film or skin layer of the release liner on the convex part is shown by the following parameter A.

$$P \propto A = E \times T^3$$

That is, the solid film or skin layer of the release liner preferably has a value of $E \times T^3$ [wherein $E(N/m^2)$ is a tensile elastic modulus of the solid film or skin layer and $T(m)$ is a thickness thereof] of less than 500 $\mu N \cdot m$, more preferably less than 62 $\mu N \cdot m$, further preferably less than 10 $\mu N \cdot m$, to disperse the stress on the convex part formed on the surface of the adhesive tape. "$E \times T^3$" relates to the force necessary for bending the solid film or skin layer, and corresponds to the force of the solid film or skin layer that acts on the convex part of the adhesive tape with a release liner when an external force is applied to the adhesive tape.

The tensile elastic modulus of the solid film or skin layer is measured by the following method. A solid film or skin layer as a surface layer is sliced with a razor blade (e.g., single-edged trimming razor manufactured by GEM), taken out from a release liner, and cut into a rectangular strip (width 10 mm, length 50 mm). The thus-obtained rectangular strip test piece is subjected to a tensile test using a tensile tester (e.g., compact desktop tester Extest manufactured by Shimadzu Corporation) under the conditions of 23°C atmosphere, distance between chucks 50 mm, tensile rate 10 mm/min, and tensile elastic modulus is calculated from the slope of the curve immediately after the start of tension in the stress-strain curve thereof.

The release agent to be used for a release treatment of the release liner is not particularly limited, and fluorine-based release agent, long chain alkyl acrylate-based release agent, silicone-based release agent and the like are used. Of these, a silicone-based release agent is preferable. As the curing method, a curing method such as UV irradiation, electron beam irradiation and the like are preferably used. Furthermore, of the silicone-based release agents, a cation polymerizable UV curable silicone-based release agent is preferable. A cation polymerizable UV curable silicone-based release agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curable silicone-based release agent wherein the onium salt photoinitiator is a boron photoinitiator, particularly good releaseability (mold releaseability) can be obtained. A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include γ-glycidyloxypropyl group, β-(3,4-epoxycyclohexyl)ethyl group, β-(4-methyl-3,4-epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd. can be mentioned.

As the silicone-based release agent, a thermosetting addition type silicone-based release agent (thermosetting addition type polysiloxane-based release agent) can also be used. The thermosetting addition type silicone-based release agent contains, as essential constituent components, polyorganosiloxane containing an alkenyl group as a functional group in a molecule (alkenyl group containing silicone) and polyorganosiloxane containing a hydrosilyl group as a functional group in a molecule.

As the above-mentioned polyorganosiloxane containing an alkenyl group as a functional group in a molecule, among others, polyorganosiloxane having two or more alkenyl groups in a molecule is preferable. Examples of the above-mentioned alkenyl group include vinyl group (ethenyl group), allyl group (2-propenyl group), butenyl group, pentenyl group, hexenyl group and the like. The above-mentioned alkenyl group is generally bonded to a silicon atom (e.g., terminal silicon atom, silicon atom in the main chain etc.) of polyorganosiloxane forming the main chain or skeleton.

Examples of the above-mentioned polyorganosiloxane forming the main chain or skeleton include polyalkylalkylsiloxane (polydialkylsiloxane) such as polydimethylsiloxane, polydiethylsiloxane, polymethylethylsiloxane and the like, polyalkylarylsiloxane, a copolymer using plural kinds of silicon atom-containing monomer components [e.g., poly(dimethylsiloxane-diethylsiloxane) etc.] and the like. Of these, polydimethylsiloxane is preferable. That is, as polyorganosiloxane containing an alkenyl group as a functional group in a molecule, specifically, polydimethylsiloxane having vinyl group, hexenyl group and the like as functional groups is preferably recited as an example.

The above-mentioned polyorganosiloxane crosslinking agent containing a hydrosilyl group as a functional group in a molecule is polyorganosiloxane having a hydrogen atom bonded to silicon atom (particularly, silicon atom having Si-H bond) in a molecule, and polyorganosiloxane having two or more silicon atoms having Si-H bond in a molecule is particularly preferable. The above-mentioned silicon atom having Si-H bond may be any of a silicon atom in the main chain and a silicon atom in the side chain. That is, it may be contained as a constituent unit of the main chain or may be contained as a constituent unit of the side chain. The number of the silicon atom having Si-H bond is not particularly limited as long as it is two or more. The above-mentioned polyorganosiloxane crosslinking agent containing a hydrosilyl group as a functional group in a molecule is specifically preferably polymethylhydrogensiloxane, poly(dimethylsiloxane-methylhydrogensiloxane) or the like.

The thermosetting silicone-based release treatment agent may contain, together with the aforementioned thermosetting silicone-based resin, a reaction inhibitor (reaction retardant) to impart preservation stability at room temperature. Examples of the reaction inhibitor include 3,5-dimethyl-1-hexyn-3-ol, 3-methyl-1-penten-3-ol, 3-methyl-3-penten-1-yne, 3,5-dimethyl-3-hexen-1-yne and the like when thermosetting addition type silicone-based release agent is used as a release agent.

The thermosetting silicone-based release treatment agent may further contain a release control agent and the like as necessary besides the above-mentioned components. Specifically, a release control agent such as MQ resin and the like, polyorganosiloxane free of alkenyl group or hydrosilyl group (trimethylsiloxy group terminated polydimethylsiloxane etc.) and the like may be added. The content of these components in the release treatment agent is not particularly limited, and 1 - 30 wt% of the whole solid content is preferable.

The thermosetting silicone-based release treatment agent generally contains a curing catalyst. As the curing catalyst, a platinum catalyst generally used as a catalyst for thermosetting addition type silicone is preferably used. Among others, at least one platinum catalyst selected from chloroplatinic acid, olefin complex of platinum and olefin complex of chloroplatinic acid is preferable. The curing catalyst can be used as it is or after dissolving or dispersing in a solvent.

The amount (solid content) of the curing catalyst is preferably 0.05 - 0.55 parts by weight, more preferably 0.06 - 0.50 parts by weight, per 100 parts by weight (resin content) of the thermosetting silicone-based resin. When the amount of the aforementioned curing catalyst is less than 0.05 parts by weight, the curing rate becomes slow, and when it exceeds 0.55 parts by weight, the pot life becomes markedly short.

In the present invention, a coating solution containing a release treatment agent used for forming a release treatment layer generally contains an organic solvent to improve coatability. The organic solvent is not particularly limited and, for example, aliphatic or alicyclic hydrocarbon solvents such as cyclohexane, hexane, heptane and the like; aromatic hydrocarbon solvents such as toluene, xylene and the like; ester solvents such as ethyl acetate, methyl acetate and the like; ketone solvents such as acetone, methylethyl ketone and the like; alcohol solvents such as methanol, ethanol, butanol and the like, and the like can be used. These organic solvents may be used singly or a mixture of two or more kinds thereof may be used.

In the release liner in the present invention, the thickness of the release layer 53 formed by a release treatment is preferably 0.001 - 10 μm, more preferably 0.03 - 5 μm, particularly preferably 0.1 - 1 μm, from the aspects of superior releasability (mold releasability) and suppression of uneven thickness (stable formation of release layer).

The adhesive tape with a release liner of the present invention is produced, for example, as follows.

A convex part pattern is formed on an adhesive surface by directly forming a convex part on the surface of an adhesive layer as a base or transcribing a convex part created by pattern formation on a releasable substrate onto an adhesive surface, a release liner is adhered, and the product is wound as a roll and stored.

In the adhesive tape with a release liner of the present invention, even when a pressure is applied onto the adhesive tape by winding tightening of a roll of the adhesive tape, crushing of the low-adhesive convex part and embedding of the low-adhesive convex part in the adhesive layer can be sufficiently suppressed, since the release liner 2 has a compressive elastic modulus of not more than 1 MPa. Accordingly, when the release liner is peeled off from the unwound adhesive tape and the adhesive tape is adhered to the adherend, the presence of the low-adhesive convex part prevents development of a high adhesive force between the adhesive tape and the adherend and permits smooth movement of the adhesive tape. As a result, the adhesive tape can be adhered to the intended position on the adherend with good workability.

The foregoing explains an adhesive tape with a release liner that is single sided adhesive tape 1 having a support, in which the release liner 2 is laid on the surface of the adhesive layer 11, opposite to the support. In the case of a double sided adhesive tape having a low-adhesive convex part formed on both surfaces of the adhesive layer, crushing of the low-adhesive convex part and embedding of the low-adhesive convex part in the adhesive layer can be sufficiently suppressed on both surfaces of the adhesive tape 1 by laying release liner 2 having a compressive elastic modulus of not more than 1 MPa on both surfaces of the adhesive layer.

The release liner in the adhesive tape with a release liner of the present invention may have both surfaces subjected to a release treatment (what is called a "single release liner"). That is, the release liner may be one in an embodiment in which not only the surface of the film (porous film etc.) to be the main component of the release liner and facing the adhesive layer (convex part) of the adhesive tape but also the surface on the opposite side are subjected to lamination of a solid film or skin layer and a release treatment, or may be one in an embodiment in which a release treatment is directly applied to the surface on the opposite side.

[Examples]

The present invention is explained in more detail in the following by referring to Examples and Comparative Examples.

[Examples 1 - 22, Comparative Examples 1, 2]

The following adhesive tapes and release liners were used. 1. Adhesive tape A

Double sided adhesive tape No.515 (tape width: 5 mm) manufactured by Nitto Denko Corporation having a low-adhesive convex part formed thereon.

- adhesive layer (adhesive: acrylic adhesive, elastic modulus: 1.56 MPa, layer thickness: 250 $\mu$m)
- low-adhesive convex part (A stripe-like pattern (protrusion height: 127 $\mu$m, elastic modulus: 2024 MPa) formed with VERSATILE DESIGN manufactured by YAMATOYO TEGUSU (fishing line with diameter 150 $\mu$m) arranged in a stripe shape with a space width of 4 mm and fixed by pressing by one reciprocation of a 5 kg roller (width 60 mm)).
- occupancy rate of low-adhesive convex part on the surface of adhesive layer: 3.6%

2. release liner

(1) release liner A

A laminate film in which a high density polyethylene film (thickness (T): 10 $\mu$m, tensile elastic modulus (E): 40 MPa, E$\times$T$^3$=0.04 $\mu$N•m, solid film) having one surface release-treated (release layer thickness: 1 $\mu$m) with a cation polymerizable UV curable silicone-based release agent (UV curable silicone X-62-7622 manufactured by Shin-Etsu Chemical Co., Ltd.) is laminated on a noncrosslinked polyethylene foam film ("Ethanone" manufactured by SAKAI CHEMICAL GROUP, foam layer thickness: 0.5 mm, apparent density: 34 kg/cm$^3$), on a surface opposite from the release treated surface.

(2) release liner B

A laminate film in which a high density polyethylene film (thickness (T): 10 $\mu$m, tensile elastic modulus (E): 40 MPa, E$\times$T$^3$=0.04 $\mu$N•m, solid film) having one surface release-treated (release layer thickness: 1 $\mu$m) with a cation polymerizable UV curable silicone-based release agent (UV curable silicone X-62-7622 manufactured by Shin-Etsu Chemical Co., Ltd.) is laminated on a noncrosslinked polyethylene foam film ("Ethanone" manufactured by SAKAI CHEMICAL GROUP, foam layer thickness: 1.0 mm, apparent density: 34 kg/cm$^3$), on a surface opposite from the release treated surface.

(3) release liner C

A polypropylene foam film (SFC100 manufactured by Nitto Denko Corporation, thickness: 0.5 mm, apparent density: 30 kg/m$^3$) having one surface release-treated (release layer thickness: 1 $\mu$m) with a cation polymerizable UV curable silicone-based release agent (UV curable silicone X-62-7622 manufactured by Shin-Etsu Chemical Co., Ltd.).

(4) release liner D

A crosslinked polyethylene foam film (SOFTLON #1001 manufactured by SEKISUI CHEMICAL CO., LTD., thickness: 1 mm, apparent density: 96 kg/m$^3$) having one surface release-treated (release layer thickness: 1 $\mu$m) with a cation polymerizable UV curable silicone-based release agent (UV curable silicone X-62-7622 manufactured by Shin-Etsu Chemical Co., Ltd.).

(5) release liner E

An EPT rubber (manufactured by IRUMAGAWA RUBBER CO., LTD., thickness: 3.0 mm) having one surface release-treated (release layer thickness: 1 $\mu$m) with a cation polymerizable UV curable silicone-based release agent (UV curable silicone X-62-7622 manufactured by Shin-Etsu Chemical Co., Ltd.).

(6) release liner F

A polyester film (Lumirror s10 manufactured by TORAY INDUSTRIES, INC., thickness: 38 $\mu$m) having one surface release-treated (release layer thickness: 1 $\mu$m) with a cation polymerizable UV curable silicone-based release agent (UV curable silicone X-62-7622 manufactured by Shin-Etsu Chemical Co., Ltd.).

(7) release liner G

A laminate film produced in the same manner as in release liner A except that a PET film (thickness (T): 25 $\mu$m, tensile elastic modulus (E): 4000 MPa, E$\times$T$^3$=62.5 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(8) release liner H

A laminate film produced in the same manner as in release liner B except that a PET film (thickness (T): 25 $\mu$m, tensile elastic modulus (E): 4000 MPa, E$\times$T$^3$=62.5 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(9) release liner I

A laminate film produced in the same manner as in release liner A except that a PET film (thickness (T): 50 $\mu$m, tensile elastic modulus (E): 4000 MPa, E$\times$T$^3$=500 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(10) release liner J

A laminate film produced in the same manner as in release liner B except that a PET film (thickness (T): 50 $\mu$m, tensile elastic modulus (E): 4000 MPa, E$\times$T$^3$=500 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(11) release liner K

A laminate film produced in the same manner as in release liner A except that a high density polyethylene film (thickness (T): 20 $\mu$m, tensile elastic modulus (E): 40 MPa, E$\times$T$^3$=0.32 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(12) release liner L

A laminate film produced in the same manner as in release liner B except that a high density polyethylene film (thickness (T) : 20 $\mu$m, tensile elastic modulus (E) : 40 MPa, E$\times$T$^3$=0.32 $\mu$N•m, solid film) was used instead of the high density polyethylene film (thickness (T) : 10 $\mu$m, tensile elastic modulus (E) : 40 MPa, E$\times$T$^3$=0.04 $\mu$N•m, solid film).

(13) release liner M

A laminate film produced in the same manner as in release liner A except that a high density polyethylene film (thickness (T) : 30 $\mu$m, tensile elastic modulus (E) : 40 MPa, E$\times$T$^3$=1.08 $\mu$N•m, solid film) was used instead of the high density polyethylene film (thickness (T) : 10 $\mu$m, tensile elastic modulus (E) : 40 MPa, E$\times$T$^3$=0.04 $\mu$N•m, solid film).

(14) release liner N

A laminate film produced in the same manner as in release liner B except that a high density polyethylene film (thickness (T) : 30 $\mu$m, tensile elastic modulus (E) : 40 MPa, E$\times$T$^3$=1.08 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(15) release liner O

A laminate film produced in the same manner as in release liner A except that a low density polyethylene film (thickness (T) : 20 $\mu$m, tensile elastic modulus (E) : 20 MPa, E$\times$T$^3$=0.16 $\mu$N•m, solid film) was used instead of the high density polyethylene film (thickness (T) : 10 $\mu$m, tensile elastic modulus (E): 40 MPa, E$\times$T$^3$=0.04 $\mu$N•m, solid film).

(16) release liner P

A laminate film produced in the same manner as in release liner B except that a low density polyethylene film (thickness (T) : 20 $\mu$m, tensile elastic modulus (E) : 20 MPa, E$\times$T$^3$=0.16 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(17) release liner Q

A laminate film produced in the same manner as in release liner A except that a low density polyethylene film (thickness (T) : 30 $\mu$m, tensile elastic modulus (E) : 20 MPa, E$\times$T$^3$=0.54 $\mu$N•m, solid film) was used instead of the high density polyethylene film (thickness (T) : 10 $\mu$m, tensile elastic modulus (E) : 40 MPa, E$\times$T$^3$=0.04 $\mu$N•m, solid film).

(18) release liner R

A laminate film produced in the same manner as in release liner B except that a low density polyethylene film (thickness (T) : 30 $\mu$m, tensile elastic modulus (E) : 20 MPa, E$\times$T$^3$=0.54 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(19) release liner S

A laminate film produced in the same manner as in release liner A except that a PET film (thickness (T): 75 $\mu$m, tensile elastic modulus (E): 4000 MPa, E$\times$T$^3$=1687.5 $\mu$N•m, solid film) was used instead of the high density polyethylene film (thickness (T) : 10 $\mu$m, tensile elastic modulus (E) : 40 MPa, E$\times$T$^3$=0.04 $\mu$N•m, solid film).

(20) release liner T

A laminate film produced in the same manner as in release liner B except that a PET film (thickness (T) : 75 $\mu$m, tensile elastic modulus (E): 4000 MPa, E$\times$T$^3$=1687.5 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(21) release liner U

A laminate film produced in the same manner as in release liner A except that a high density polyethylene film (thickness (T) : 50 $\mu$m, tensile elastic modulus (E) : 40 MPa, E$\times$T$^3$=5.0 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(22) release liner V

A laminate film produced in the same manner as in release liner B except that a high density polyethylene film (thickness (T) : 50 $\mu$m, tensile elastic modulus (E) : 40 MPa, E$\times$T$^3$=5.0 N•m, solid film) was used instead of the high density polyethylene film (thickness (T): 10 $\mu$m, tensile elastic modulus (E): 40 MPa, E$\times$T$^3$=0.04 $\mu$N•m, solid film).

(23) release liner W

A laminate film produced in the same manner as in release liner A except that a low density polyethylene film (thickness (T): 50 $\mu$m, tensile elastic modulus (E) : 20 MPa, E$\times$T$^3$=2.5 $\mu$N•m, solid film) was used instead of the high density polyethylene film (thickness (T): 10 $\mu$m, tensile elastic modulus (E): 40 MPa, E$\times$T$^3$=0.04 $\mu$N•m, solid film).

(24) release liner X

A laminate film produced in the same manner as in release liner B except that a low density polyethylene film (thickness (T) : 50 $\mu$m, tensile elastic modulus (E): 20 MPa, E$\times$T$^3$=2.5 $\mu$N•m, solid film) was used instead of the high density polyethylene film (thickness (T): 10 $\mu$m, tensile elastic modulus (E): 40 MPa, E$\times$T$^3$=0,04 $\mu$N•m, solid film).
The tensile elastic modulus of the solid films in release liners A, B, G - X was measured by the aforementioned test method.

3. Measurement of compressive elastic modulus, compressive stress upon 200 $\mu$m compression, and compressive stress at a deformation amount of 200 $\mu$m during compression recovery (compressive stress during 200 $\mu$m recovery) of release liner

A compression test using an autograph (compact desktop tester EXtest manufactured by Shimadzu Corporation) was performed.

A release liner (4 cm×4 cm) was placed on a table (made of SUS) with the surface opposite to the surface subjected to a release treatment facing the table, and a cylindrical indenter (made of SUS) was pressed against the center portion of the release liner (4 cm×4 cm) from a direction perpendicular to the release treatment surface and the compressive stress was measured (temperature: 23°C, indenter area: 1 cm$^2$, compression rate: 1 mm/min). After reaching the objective stress 0.1 MPa, the cylindrical indenter was moved in the tensile direction at a rate of 1 mm/min to allow for compression recovery.

4. Evaluation of crushing of convex part

A release layer side of the release liner was placed on an adhesive layer of the adhesive tape A, pressure 0.1 MPa was applied on the back face of the release liner for 5 min, and the height of the convex part before and after application of the pressure was measured under a laser microscope (OLS4000 manufactured by Olympus Corporation).

5. Evaluation of frictional force

According to the aforementioned method, the frictional force of a convex part on the surface of the adhesive layer of the adhesive tape A was measured.

The measurement results of the physical properties and characteristics of Examples and Comparative Examples are shown in Table 1.

Table 1

| | release liner | compressive elastic modulus (MPa) | compressive stress (MPa) upon 200 μm compression | stress (MPa) during 200 μm recovery after compression | E×T³ (μN•m) of solid film | convex part height residual ratio (%) | frictional force (N/cm²) | evaluation A | evaluation B |
|---|---|---|---|---|---|---|---|---|---|
| Ex. 1 | A | 0.03 | 0.01 | 0.002 | 0.04 | 76 | 0.1 | ○ | ⊙ |
| Ex. 2 | B | 0.03 | 0.004 | 0.003 | 0.04 | 99 | 0.05 | ○ | ⊙ |
| Ex. 3 | C | 0.03 | 0.006 | 0.001 | - | 93 | 0.1 | ○ | ⊙ |
| Ex. 4 | D | 0.16 | 0.034 | 0.033 | - | 79 | 0.19 | ○ | ⊙ |
| Ex. 5 | G | 0.01 | 0.012 | 0.005 | 62.5 | 46 | 0.3 | ○ | ○ |
| Ex. 6 | H | 0.012 | 0.002 | 0.0003 | 62.5 | 54 | 0.1 | ○ | ○ |
| Ex. 7 | I | 0.01 | 0.014 | 0.005 | 500 | 35 | 0.3 | ○ | Δ |
| Ex. 8 | J | 0.01 | 0.005 | 0.015 | 500 | 39 | 0.13 | ○ | Δ |
| Ex. 9 | K | 0.009 | 0.017 | 0.007 | 0.32 | 65 | 0.25 | ○ | ⊙ |
| Ex. 10 | L | 0.017 | 0.009 | 0.002 | 0.32 | 71 | 0.1 | ○ | ⊙ |
| Ex. 11 | M | 0.012 | 0.020 | 0.010 | 1.08 | 57 | 0.275 | ○ | ○ |
| Ex. 12 | N | 0.017 | 0.009 | 0.001 | 1.08 | 63 | 0.125 | ○ | ⊙ |
| Ex. 13 | O | 0.018 | 0.022 | 0.013 | 0.16 | 67 | 0.275 | ○ | ⊙ |
| Ex. 14 | P | 0.021 | 0.008 | 0.015 | 0.16 | 72 | 0.125 | ○ | ⊙ |
| Ex. 15 | Q | 0.021 | 0.021 | 0.012 | 0.54 | 47 | 0.25 | ○ | ○ |
| Ex. 16 | R | 0.019 | 0.010 | 0.002 | 0.54 | 65 | 0.125 | ○ | ⊙ |
| Ex. 17 | S | 0.004 | 0.010 | 0.004 | 1687.5 | 31 | 0.325 | ○ | Δ |
| Ex. 18 | T | 0.004 | 0.001 | 0.0003 | 1687.5 | 31 | 0.14 | ○ | Δ |
| Ex. 19 | U | 0.010 | 0.015 | 0.006 | 5 | 50 | 0.275 | ○ | ○ |
| Ex. 20 | V | 0.009 | 0.004 | 0.002 | 5 | 53 | 0.175 | ○ | ○ |
| Ex. 21 | W | 0.014 | 0.018 | 0.008 | 2.5 | 43 | 0.225 | ○ | ○ |
| Ex. 22 | X | 0.027 | 0.010 | 0.001 | 2.5 | 55 | 0.125 | ○ | ⊙ |

(continued)

| | release liner | compressive elastic modulus (MPa) | compressive stress (MPa) upon 200 $\mu$m compression | stress (MPa) during 200 $\mu$m recovery after compression | $E \times T^3$ ($\mu$N•m) of solid film | convex part height residual ratio (%) | frictional force (N/cm$^2$) | evaluation A | evaluation B |
|---|---|---|---|---|---|---|---|---|---|
| Com. Ex. 1 | E | 3.41 | >10 | >10 | - | 58 | 0.7 | × | ○ |
| Com. Ex. 2 | F | 3.9 | >10 | >10 | - | 22 | 0.75 | × | Δ |

In evaluation A in Table 1, "○" is good (frictional force of not more than 0.4 N/cm), "x" is failure (frictional force exceeding 0.4 N/cm).

In evaluation B in Table 1, "⊙" is best (compressive elastic modulus of release liner not more than 1 MPa, and convex part height residual ratio not less than 60%), "○" is good (compressive elastic modulus of release liner not more than 1 MPa, and convex part height residual ratio not less than 40% and less than 60%), "Δ" is acceptable (compressive elastic modulus of release liner not more than 1 MPa, and convex part height residual ratio less than 40%)

[Explanation of Symbols]

1 adhesive tape
2 release liner
3 adherend
10 support
11 adhesive layer
12 low-adhesive convex part
51 porous film (foam film)
52 other film (layer)
53 release layer

This application is based on patent application Nos. 2015-203009 and 2016-198520 filed in Japan, the contents of which are incorporated in full herein.

**Claims**

1. An adhesive tape with a release liner, comprising an adhesive tape having a low-adhesive convex part partially formed on a surface of an adhesive layer, and a release liner for protecting the surface of the adhesive layer of the adhesive tape, wherein the release liner has a compressive elastic modulus of not more than 1 MPa.

2. The adhesive tape with a release liner according to claim 1, wherein the release liner has a compressive stress of not more than 0.1 MPa upon 200 μm compression, and a compressive stress of not more than 0.05 MPa at a deformation amount of 200 μm during compression recovery after the compression.

3. The adhesive tape with a release liner according to claim 1 or 2, wherein the release liner comprises (a) a porous film, (b) a solid film or a skin layer laminated on at least one surface of (a), and (c) a release treatment applied to a surface of (b) the solid film or the skin layer.

4. The adhesive tape with a release liner according to claim 3, wherein (a) the porous film is a polyolefin foam, a polyester foam, a polyurethane foam or a rubber foam.

5. The adhesive tape with a release liner according to claim 4, wherein (b) the solid film is a resin solid film, and $E \times T^3$ value is less than 500 μN·m wherein tensile elastic modulus of the resin solid film or skin layer is $E (N/m^2)$ and thickness is T (m).

6. The adhesive tape with a release liner according to any one of claims 3 to 5, wherein the solid film comprises one or more kinds of resins selected from the group consisting of high density polyethylene, low density polyethylene, polypropylene, ethylene•propylene copolymer, ethylene.vinyl acetate copolymer and poly(ethylene terephthalate).

7. The adhesive tape with a release liner according to any one of claims 1 to 6, wherein the low-adhesive convex part partially formed on the surface of the adhesive layer of the adhesive tape is a stripe-like, lattice mesh or dot-like low-adhesive pattern having a protrusion height of not more than 200 μm from the surface of the adhesive layer.

8. The adhesive tape with a release liner according to any one of claims 1 to 7, wherein the adhesive layer has an elastic modulus of 0.01 - 10 MPa.

9. The adhesive tape with a release liner according to any one of claims 1 to 8, wherein the low-adhesive convex part has an elastic modulus of not less than 0.1 MPa.

10. The adhesive tape with a release liner according to any one of claims 1 to 9, wherein the low-adhesive convex part has an elastic modulus higher than the elastic modulus of the adhesive layer.

11. A release liner for protecting a surface of an adhesive layer of an adhesive tape having a low-adhesive convex part partially formed on the surface of the adhesive layer, the release liner having a compressive elastic modulus of not more than 1 MPa.

12. The release liner according to claim 11 having a compressive stress of not more than 0.1 MPa upon 200 $\mu$m compression, and a compressive stress of not more than 0.05 MPa at a deformation amount of 200 $\mu$m during compression recovery after the compression.

13. The release liner according to claim 11 or 12 comprising (a) a porous film, (b) a solid film or a skin layer laminated on at least one surface of (a), and (c) a release treatment applied to a surface of (b) the solid film or the skin layer.

14. The release liner according to claim 13, wherein (a) the porous film is a polyolefin foam, a polyester foam, a polyurethane foam or a rubber foam.

15. The release liner according to claim 14, wherein (b) the solid film is a resin solid film, and $E \times T^3$ value is less than 500 $\mu$N$\cdot$m wherein tensile elastic modulus of the resin solid film or skin layer is $E(N/m^2)$ and thickness is $T(m)$.

16. The release liner according to any one of claims 13 to 15, wherein the solid film comprises one or more kinds of resins selected from the group consisting of high density polyethylene, low density polyethylene, polypropylene, ethylene$\cdot$propylene copolymer, ethylene$\cdot$vinyl acetate copolymer and poly(ethylene terephthalate).

Fig. 1

Fig. 2

(A)          (B)          (C)

Fig. 3

Fig. 4

Fig. 5

Fig. 6

Fig. 7

Fig. 8

Fig. 9

Fig. 10

(a)

(b)

Fig. 11

weight
(50 g)

10A"

10A

15

tension (300 mm/min)

PET substrate

10A'

adhesive layer with
convex part

1A sample (2 cm square)

11

adherend (SUS304BA)

3

12

## INTERNATIONAL SEARCH REPORT

| International application No. |
| --- |
| PCT/JP2016/080539 |

A.  CLASSIFICATION OF SUBJECT MATTER
*C09J7/00*(2006.01)i, *B32B27/00*(2006.01)i, *C09J201/00*(2006.01)i

According to International Patent Classification (IPC) or to both national classification and IPC

B.  FIELDS SEARCHED

Minimum documentation searched (classification system followed by classification symbols)
C09J7/00, B32B27/00, C09J201/00

Documentation searched other than minimum documentation to the extent that such documents are included in the fields searched
Jitsuyo Shinan Koho          1922–1996    Jitsuyo Shinan Toroku Koho   1996–2016
Kokai Jitsuyo Shinan Koho    1971–2016    Toroku Jitsuyo Shinan Koho   1994–2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br>A | JP 09-227843 A  (Sekisui Chemical Co., Ltd.),<br>02 September 1997 (02.09.1997),<br>claims; paragraphs [0008] to [0043]; examples 1<br>to 8<br>(Family: none) | 1,2,7-12<br>3-6,13-16 |
| Y<br>A | JP 10-219204 A  (Sekisui Chemical Co., Ltd.),<br>18 August 1998 (18.08.1998),<br>claims; paragraphs [0005] to [0019]; examples 1<br>to 6<br>(Family: none) | 1,2,7-12<br>3-6,13-16 |
| Y<br>A | JP 2004-002805 A  (Yupo Corp.),<br>08 January 2004 (08.01.2004),<br>claims; paragraphs [0003] to [0012]; examples 1<br>to 3<br>(Family: none) | 1,2,7-12<br>3-6,13-16 |

☒  Further documents are listed in the continuation of Box C.        ☐  See patent family annex.

| | |
| --- | --- |
| *      Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 09 November 2016 (09.11.16) | 22 November 2016 (22.11.16) |

| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |
| --- | --- |

Form PCT/ISA/210 (second sheet) (January 2015)

**INTERNATIONAL SEARCH REPORT**

| International application No. |
|---|
| PCT/JP2016/080539 |

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 2002-149070 A  (Kiso Chemical Co., Ltd.),<br>22 May 2002 (22.05.2002),<br>claims; paragraphs [0005] to [0006]<br>(Family: none) | 1,2,7-12<br>3-6,13-16 |
| Y<br>A | JP 2008-112713 A  (Hitachi Chemical Co., Ltd.),<br>15 May 2008 (15.05.2008),<br>claims; paragraphs [0015] to [0020]<br>(Family: none) | 1,2,7-12<br>3-6,13-16 |
| A | JP 2015-108121 A  (Sekisui Chemical Co., Ltd.),<br>11 June 2015 (11.06.2015),<br>entire text<br>(Family: none) | 1-16 |
| A | JP 07-310057 A  (Nitto Denko Corp.),<br>28 November 1995 (28.11.1995),<br>entire text<br>(Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01118584 A
- JP 2010215900 A
- JP 2001279200 A
- JP 2015203009 A
- JP 2016198520 A